(19) Europäisches Patentamt
European Patent Office
Office européen des brevets

(11) **EP 4 501 857 A1**

(12) **EUROPEAN PATENT APPLICATION**
published in accordance with Art. 153(4) EPC

(43) Date of publication:
**05.02.2025 Bulletin 2025/06**

(21) Application number: **23780766.4**

(22) Date of filing: **29.03.2023**

(51) International Patent Classification (IPC):
***C01G 41/00*** *(2006.01)*      ***C09K 3/00*** *(2006.01)*

(52) Cooperative Patent Classification (CPC):
**C01G 41/00; C09K 3/00**

(86) International application number:
**PCT/JP2023/012980**

(87) International publication number:
**WO 2023/190758 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022 JP 2022061250**

(71) Applicant: SUMITOMO METAL MINING CO., LTD.
Tokyo
105-8716 (JP)

(72) Inventors:
• **NAKAKURA, Shuhei**
**Ichikawa-shi, Chiba 272-8588 (JP)**
• **WAKABAYASHI, Masao**
**Ichikawa-shi, Chiba 272-8588 (JP)**
• **TAYAMA, Mayu**
**Ichikawa-shi, Chiba 272-8588 (JP)**

(74) Representative: **Jones, Nicholas Andrew**
**Withers & Rogers LLP**
**2 London Bridge**
**London SE1 9RA (GB)**

(54) **COMPOSITE TUNGSTEN OXIDE PARTICLES, NEAR-INFRARED-ABSORBING PARTICLE DISPERSION LIQUID, AND NEAR-INFRARED-ABSORBING PARTICLE DISPERSION**

(57)     Complex tungsten oxide particles containing a complex tungsten oxide, wherein the complex tungsten oxide is represented by a general formula: $M_xW_yO_z$ (where an element M is one or more selected from alkali metals, alkaline earth metals, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I, $0.20 \leq x/y \leq 0.37$, and $2.2 \leq z/y \leq 3.3$.), the crystal system is hexagonal, when the complex tungsten oxide particles are observed via a (010) plane, the occupation ratio of the length of a side formed by a plane parallel with the c-axis among the sides surrounding the (010) plane is 60% or more.

EP 4 501 857 A1

**Description**

TECHNICAL FIELD

The present invention relates to complex tungsten oxide particles, a near-infrared-absorbing particle dispersion liquid, and a near-infrared-absorbing particle dispersion body.

BACKGROUND ART

Various techniques have been proposed as near infrared shielding techniques that decreases solar transmittance while keeping a good visible light transmittance and maintaining transparency. Among them, a near infrared shielding technique using inorganic conductive particles has advantages such as excellent near infrared shielding characteristics and a low cost compared with other techniques, and radio wave transmittance, and high weather resistance.

For example, PTL 1 discloses a technology related to an infrared shielding material particle dispersion body in which complex tungsten oxide particles represented by a general formula: $M_xW_yO_z$ (where M is one or more elements selected from H, He, alkali metals, alkaline earth metals, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I, W is tungsten, O is oxygen, $0.001 \leq x/y \leq 1$, and $2.2 \leq z/y \leq 3.0$) are dispersed as infrared shielding particles in a medium such as a resin, and a method for producing the infrared shielding particles. PTL 1 also discloses an example of producing an infrared shielding film that is a thin film-shaped infrared shielding material particle dispersion body.

According to PTL 1, it is possible to produce an infrared shielding material particle dispersion body having excellent optical properties such as more efficient shielding of sunlight, especially light in the near infrared range while maintaining transmittance in the visible light range. Therefore, applying the infrared shielding particle dispersion body disclosed in PTL 1 to various applications such as window glass has been studied.

According to NPL 2, $Cs_{0.32}WO_3$ particles, which are known as one of photochromic materials, have a property of becoming more bluish in hue in response to strong UV irradiation (hereinafter, a UV coloring phenomenon). According to NPL 2, it is also reported that after the UV coloring phenomenon, the particles gradually return to the original light blue color by being stored in a dark place. The above-mentioned UV coloring phenomenon has arisen as a problem against the popularization of complex tungsten oxide particles. Under such circumstances, studies into how to decrease the UV coloring phenomenon have been conducted.

NPL 3 discloses a synthesis of a composite material of $SiO_2$, UVA, and CWO by addition of tetraethyl orthosilicate and an Ultra-Violet absorber (UV-absorbing agent, UVA) to $Cs_{0.32}WO_3$ particles, which are complex tungsten oxide particles.

NPL 4 discloses inhibiting generation of protons that would exist near the surface of $Cs_{0.32}WO_3$ particles by kneading the $Cs_{0.32}WO_3$ particles into an inert polymer using a melt blending process.

The methods disclosed in NPLs 3, 4, and the like intend to decrease the UV coloring phenomenon by combining complex tungsten oxide particles with a UV absorber and the like, but have not succeeded in improving the characteristics of the $Cs_{0.32}WO_3$ particles themselves.

In the meantime, various studies have been conducted into a method for producing complex tungsten oxide particles useful as a near infrared shielding material.

For example, the inventor of PTL 1 proposed a method for synthesizing $Cs_{0.32}WO_3$ nanoparticles by a solid phase method in NPL 1. However, the particle diameter obtained by the synthesis method disclosed in NPL 1 is large, and a grinding process is necessary to obtain nanoparticles. Therefore, this may increase the number of steps included in the process.

PTL 2 proposes synthesizing potassium cesium tungsten bronze solid solution particles using a plasma torch in a reducing atmosphere.

NPL 5 discloses a hydrothermal synthesis method of $Cs_xWO_3$. However, the hydrothermal synthesis method requires a synthesis time of several tens of hours or more. In addition, the hydrothermal synthesis method has a problem that a post-treatment process or the like includes many steps.

NPL 6 discloses a synthesis method based on an inductively coupled thermal plasma technology. However, such a synthesis method requires introduction of an inductively coupled thermal plasma apparatus, which increases the cost.

NPL 7 discloses a method for synthesizing a complex tungsten oxide by a water-solvent flame spray pyrolysis method. However, the infrared absorption property was poor due to a small amount of Cs.

NPL 8 discloses a method for synthesizing a complex tungsten oxide by a water-solvent spray pyrolysis method, wherein a method for synthesizing a complex tungsten oxide with less Cs desorption from the particle surface, and an improved light-resistant coloring property are disclosed. However, the infrared absorption property was low.

PTL 3 and PTL 4 disclose a method for producing complex tungsten particles by a flame spray method.

CITATION LIST

PATENT LITERATURE

PTL 1: Japanese Patent No. 4096205
PTL 2: Japanese Patent No. 2012-532822
PTL 3: International Publication No. WO 2017/129516
PTL 4: United States Patent Application Publication No. 2010/0102700

NON-PATENT LITERATURE

NPL 1: Takeda Hiromitsu, and Kenji Adachi, "Near infrared absorption of tungsten oxide nanoparticle dispersions.", Journal of the American Ceramic Society, 2007, Vol. 90, Issue 12, pp.4059-4061
NPL 2: Adachi K., Ota Y., Tanaka H., Okada M., Oshimura N., & Tofuku A, (2013), Chromatic instabilities in cesium-doped tungsten bronze nanoparticles, Journal of Applied Physics, 114(19), 194304
NPL 3: Zeng Xianzhe, et al., "The preparation of a high performance near infrared shielding CsxWO3/SiO2 composite resin coating and research on its optical stability under ultraviolet illumination.", Journal of Materials Chemistry C 3.31 (2015): 8050-8060
NPL 4: Zhou Yijie, et al., "CsxWO3 nanoparticle-based organic polymer transparent foils: low haze, high near infrared-shielding ability and excellent photochromic stability.", Journal of Materials Chemistry C 5.25 (2017): 6251-6258
NPL 5: Guo Chongshen, et al., "Novel synthesis of homogeneous CsxWO3 nanorods with excellent NIR shielding properties by a water controlled-release solvothermal process.", Journal of Materials Chemistry, 2010, Vol. 20, Issue 38, pp.8227-8229
NPL 6: Mamak Marc, et al., "Thermal plasma synthesis of tungsten bronze nanoparticles for near infra-red absorption applications.", Journal of Materials Chemistry, 2010, Vol.20, Issue 44, pp.9855-9857
NPL 7: Hirano Tomoyuki, et al. "Synthesis of highly crystalline hexagonal cesium tungsten bronze nanoparticles by flame-assisted spray pyrolysis.", Advanced Powder Technology 29.10 (2018): 2512-2520
NPL 8: Nakakura Shuhei, et al., "Improved photochromic stability in less deficient cesium tungsten bronze nanoparticles.", Advanced Powder Technology 31.2 (2020): 702-707
NPL 9: Machida K.; Okada M.; Adachi K., Excitations of free and localized electrons at nearby energies in reduced cesium tungsten bronze nanocrystals, J. Appl. Phys, 2019, 125(10), 103103

SUMMARY OF THE INVENTION

TECHNICAL PROBLEM

As described above, complex tungsten oxide particles are useful as a near infrared shielding material. However, when complex tungsten oxide is irradiated with ultraviolet rays, it may become colored.

Therefore, it is an object of the present invention to provide complex tungsten oxide particles capable of suppressing coloration when irradiated with ultraviolet rays.

SOLUTION TO THE PROBLEM

In one aspect of the present invention, complex tungsten oxide particles containing a complex tungsten oxide is provided,

wherein the complex tungsten oxide is represented by a general formula: $M_xW_yO_z$ (where the element M is one or more elements selected from alkali metals, alkaline earth metals, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi and I, W is tungsten, O is oxygen, $0.20 \leq x/y \leq 0.37$, and $2.2 \leq z/y \leq 3.3$),
the crystal system is hexagonal, and
when the complex tungsten oxide particles are observed via a (010) plane, an occupation ratio of a length of a side formed by a plane parallel with a c-axis among sides surrounding the (010) plane is 60% or more.

ADVANTAGEOUS EFFECTS OF THE INVENTION

According to one aspect of the present invention, it is possible to provide complex tungsten oxide particles capable of suppressing coloration when irradiated with ultraviolet rays.

BRIEF DESCRIPTION OF THE DRAWINGS

[FIG. 1] FIG. 1 is an exemplary diagram of a complex material production apparatus that is suitable for a method of manufacturing complex tungsten oxide particles according to the present embodiment.
[FIG. 2] FIG. 2 is a diagram illustrating a reducing treatment apparatus used in the reducing process step.
[FIG. 3] FIG. 3 is an exemplary diagram of a near-infrared-absorbing particle dispersion liquid.
[FIG. 4] FIG. 4 is an exemplary diagram of a near-infrared-absorbing particle dispersion body.
[FIG. 5] FIG. 5 is an exemplary diagram of a near-infrared-absorbing laminate.
[FIG. 6] FIG. 6 is an exemplary diagram of a near-infrared-absorbing transparent substrate.
[FIG. 7A] FIG. 7A is an XRD diffraction pattern of complex tungsten oxide particles obtained in Example 1.
[FIG. 7B] FIG. 7B is an XRD diffraction pattern of complex tungsten oxide particles obtained in Example 2.
[FIG. 7C] FIG. 7C illustrates lattice constants of the complex tungsten oxide particles obtained in Example 2.
[FIG. 8A] FIG. 8A is a TEM image of the complex tungsten oxide particles obtained in Example 1.
[FIG. 8B] FIG. 8B is a HAADF-STEM image of the complex tungsten oxide particles obtained in Example 1.
[FIG. 8C] FIG. 8C is a HAADF-STEM image of the complex tungsten oxide particles obtained in Example 1.
[FIG. 9A] FIG. 9A is a TEM image of the complex tungsten oxide particles obtained in Example 2.
[FIG. 9B] FIG. 9B is a HAADF-STEM image of the complex tungsten oxide particles obtained in Example 2.
[FIG. 9C] FIG. 9C is a HAADF-STEM image of the complex tungsten oxide particles obtained in Example 2.
[FIG. 10A] FIG. 10A illustrates change in the transmission profile of an ink obtained in Example 3 with respect to a grinding dispersion treatment time.
[FIG. 10B] FIG. 10B illustrates the result of evaluation of the particle size distribution of complex tungsten oxide particles contained in the ink obtained in Example 3 and having been subjected to a grinding dispersion treatment for 5 hours.
[FIG. 10C] FIG. 10C illustrates a TEM image of complex tungsten oxide particles contained in the ink obtained in Example 3 and having been subjected to a grinding dispersion treatment for 5 hours.
[FIG. 11A] FIG. 11A illustrates the result of measurement of the molar absorption coefficient of complex tungsten oxide particles contained in inks obtained in Example 3 and Comparative Example 2.
[FIG. 11B] FIG. 11B illustrates the result of measurement of the solar transmittance of complex tungsten oxide particles contained in the inks obtained in Example 3 and Comparative Example 2.
[FIG. 12A] FIG. 12A is a graph illustrating changes in the absorbance curve of a near-infrared-absorbing particle dispersion body obtained in Example 3 in response to UV irradiation.
[FIG. 12B] FIG. 12B is a graph illustrating changes in the absorbance curve of a near-infrared-absorbing particle dispersion body obtained in Comparative Example 2 in response to UV irradiation.
[FIG. 13] FIG. 13 is a graph illustrating ΔR of the near-infrared-absorbing particle dispersion bodies obtained in Example 3 and Comparative Example 2 with respect to the amount of ultraviolet irradiation when they are irradiated with UV.
[FIG. 14] FIG. 14 is a graph illustrating ΔE of the near-infrared-absorbing particle dispersion bodies obtained in Example 3 and Comparative Example 2 with respect to the amount of ultraviolet irradiation when they are irradiated with UV.
[FIG. 15A] FIG. 15A illustrates a crystal structure of complex tungsten oxide particles that are near-infrared-absorbing particles.
[FIG. 15B] FIG. 15B is a HAADF-STEM image of near-infrared-absorbing particles obtained in Example 3.
[FIG. 15C] FIG. 15C is a HAADF-STEM image of near-infrared-absorbing particles obtained in Example 3.
[FIG. 15D] FIG. 15D is a HAADF-STEM image of the near-infrared-absorbing particles obtained in Example 3.
[FIG. 15E] FIG. 15E is a HAADF-STEM image of near-infrared-absorbing particles obtained in Comparative Example 2.
[FIG. 15F] FIG. 15F is a HAADF-STEM image of the near-infrared-absorbing particles obtained in Comparative Example 2.
[FIG. 15G] FIG. 15G is a HAADF-STEM image of the near-infrared-absorbing particles obtained in Comparative Example 2.
[FIG. 16A] FIG. 16A illustrates change in the transmission profile of an ink obtained in Comparative Example 2 with respect to a grinding dispersion treatment time.

[FIG. 16B] FIG. 16B illustrates the result of evaluation of the particle size distribution of complex tungsten oxide particles contained in the ink obtained in Comparative Example 2 and having been subjected to a grinding dispersion treatment for 7 hours.

[FIG. 16C] FIG. 16C is a TEM image of complex tungsten oxide particles contained in the ink obtained in Comparative Example 2 and having been subjected to a grinding dispersion treatment for 7 hours.

DETAILED DESCRIPTION OF THE INVENTION

Specific examples of complex tungsten oxide particles, a near-infrared-absorbing particle dispersion liquid, and a near-infrared-absorbing particle dispersion body according to an embodiment of the present disclosure (hereinafter referred to as "the present embodiment") will be described below with reference to the drawings. It should be noted that the present invention is not limited to these examples, is represented by the claims, and is intended to include all modifications that are within the meaning and scope of equivalents of the claims.

[Complex Tungsten Oxide Particles]

The complex tungsten oxide particles of the present embodiment are complex tungsten oxide particles containing a complex tungsten oxide. Although the complex tungsten oxide particles may be made of a complex tungsten oxide, the particles are not excluded from containing unavoidable impurities.

The complex tungsten oxide is represented by a general formula: $M_xW_yO_z$.

The element M in the above general formula may be one or more elements selected from alkali metals, alkaline earth metals, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I. W represents tungsten and O represents oxygen, and it is preferable that x, y, and z satisfy $0.20 \leq x/y \leq 0.37$ and $2.2 \leq z/y \leq 3.3$.

The crystal system of the complex tungsten oxide is hexagonal.

When the complex tungsten oxide particles are observed via the (010) plane, the occupation ratio of the length of a side formed by a plane parallel with the c-axis among the sides surrounding the (010) plane is 60% or more.

(1) Composition

The complex tungsten oxide contained in the complex tungsten oxide particles is represented by the general formula: $M_xW_yO_z$ as described above. The element M, W, and O, and x, y, and z in the formula have already been described, and a description thereof is omitted here.

The complex tungsten oxide can assume one or more tungsten bronze-type crystal structures selected from tetragonal, cubic, and hexagonal crystals. The complex tungsten oxide contained in the complex tungsten oxide particles of the present embodiment is hexagonal.

When the complex tungsten oxide has a hexagonal crystal structure, transmission of light in the visible light range through the particles is improved, and absorption of light in the near infrared range into the particles is improved.

Also when the complex tungsten oxide assumes a tetragonal or cubic tungsten bronze structure, it functions as an infrared shielding material. However, depending on the crystal structure it assumes, the complex tungsten oxide tends to absorb light in the near infrared range at different positions, and the near infrared range position at which it absorbs light tends to shift to a longer wavelength side when it is tetragonal than when it is cubic, and tends to shift to an even longer wavelength side when it is hexagonal than when it is tetragonal. Accompanying the shift in the absorption position, light in the visible light range is the least absorbed by the hexagonal crystal and the next least absorbed by the tetragonal crystal, and light in the visible light range is the most absorbed by the cubic crystal. Therefore, it is preferable to use the hexagonal tungsten bronze for a purpose of better transmitting light in the visible light range and better shielding light in the infrared range.

As described above, when the complex tungsten oxide has a hexagonal crystal structure, the transmittance of light in the visible light range through the complex tungsten oxide particles and absorption of light in the near infrared range by the complex tungsten oxide particles are particularly improved. For this reason, it is preferable that the complex tungsten oxide particles contain a complex tungsten oxide having a hexagonal crystal structure. Use of one or more types selected from Cs, Rb, K, Tl, Ba, and In as the element M facilitates formation of a hexagonal crystal. For this reason, it is preferable that the element M contains one or more types selected from Cs, Rb, K, Tl, Ba, and In, and it is more preferable that the element M contains one or more types selected from Rb and Cs.

Here, the positioning of the element M when the complex tungsten oxide has a hexagonal crystal structure will be described.

When six octahedrons each formed by a W (tungsten) atom and six O (oxygen) atoms as a unit, that is, octahedrons in each of which O atoms are positioned on the vertices and a W atom is positioned in the center, are assembled, a hexagonal void (tunnel) formed of O atoms is formed. When the element M is positioned in the void, a single unit is formed. When many such single units are assembled, a hexagonal crystal structure is formed.

When the complex tungsten oxide having a hexagonal crystal structure has a uniform crystal structure, the molar ratio of the element M to W is $0.20 \leq x/y \leq 0.37$, and is preferably $0.30 \leq x/y \leq 0.36$. Theoretically, it is considered that the value of x/y being 0.33 when z/y=3 means that the element M is positioned in all hexagonal voids. The above x, y, and z denote x, y, and z in the aforementioned general formula: $M_xW_yO_z$, and the same applies hereinafter.

Similarly, when z/y=3, each of the cubic and tetragonal complex tungsten oxides has an upper limit of the mole number (amount of addition) of the element M due to a structural factor, and the maximum mole number of the element M to 1 mole of tungsten is 1 mole in a cubic crystal and approximately 0.5 moles in a tetragonal crystal. The maximum mole number of the element M to 1 mole of tungsten in a tetragonal crystal varies depending on the type of the element M, but a tetragonal complex tungsten oxide is industrially easy to produce when the maximum mole number of the element M is approximately 0.5 moles as described above.

A complex tungsten oxide has a composition of the element M being added to tungsten trioxide ($WO_3$). Tungsten trioxide does not contain effective free electrons, so an infrared absorption effect cannot be exhibited unless the ratio of oxygen to 1 mole of tungsten is less than 3. However, addition of the element M can generate free electrons, resulting in a complex tungsten oxide having an infrared absorption effect. Therefore, the ratio of oxygen to 1 mole of tungsten can be 3 or less. The ratio of oxygen to 1 mole of tungsten may exceed 3. However, the $WO_2$ crystal phase may cause absorption and scattering of light in the visible light range, thereby decreasing absorption of light in the near infrared range. Therefore, from the viewpoint of inhibiting formation of $WO_2$, the ratio of oxygen to 1 mole of tungsten is preferably greater than 2.

Therefore, it is preferable that z/y, which is the ratio of oxygen to 1 mole of tungsten, satisfies $2.2 \leq z/y \leq 3.3$ as described above.

(2) Particle Diameter

When the complex tungsten oxide particles of the present embodiment are used for, for example, an application in which transparency ought to be maintained, it is preferable that the complex tungsten oxide particles have a particle diameter of 800 nm or less. This is because the particles having a particle diameter of 800 nm or less do not completely scatter and shield light, and can maintain a high visibility in the visible light range and efficiently maintain transparency at the same time. When transparency in the visible light range is particularly important, it is preferable to further taken into consideration scattering by the particles.

When decreasing scattering by the particles is important, the particle diameter is more preferably 200 nm or less, and yet more preferably 100 nm or less.

This is because, when the particle diameter is small, light being scattered in the visible light range in the wavelength range of from 400 nm to 780 nm due to geometric scattering or Mie scattering decreases, and as a result, an infrared shielding film such as a near-infrared-absorbing particle dispersion body can avoid becoming like frosted glass unable to have a clear transparency, and because a particle diameter of 200 nm or less is in the Rayleigh scattering region, in which the geometric scattering or the Mie scattering is attenuated, and in which light to be scattered decreases in proportion to the 6th power of the particle diameter, which means that transparency is improved as the particle diameter decreases and scattering decreases. Furthermore, a particle diameter of 100 nm or less is preferable because light to be scattered is very scarce. From the viewpoint of avoiding scattering of light, a smaller particle diameter is preferable.

For this reason, when the complex tungsten oxide particles of the present embodiment ought to maintain a high visibility in the visible light range as described above, the particle diameter thereof is preferably 800 nm or less, more preferably 200 nm or less, and yet more preferably 100 nm or less. The lower limit of the particle diameter of the complex tungsten oxide particles of the present embodiment is not particularly limited, but is preferably 1 nm or more, and more preferably 10 nm or more.

The particle diameter of the complex tungsten oxide particles of the present embodiment may be the diameter of a minimum circumscribed circle drawn to be circumscribed on the particles observed by, for example, a SEM or a TEM.

(3) Coloration by Ultraviolet Irradiation

The phenomenon of the complex tungsten oxide particles being colored in response to ultraviolet irradiation is under the effect of element M deficiency in the complex tungsten oxide particles.

Considering the relationship between the crystal structure of the hexagonal complex tungsten oxide particles and element M deficiency, the element M does not desorb from the particles via the (100) columnar plane of the hexagonal crystal, which is a plane parallel with the c-axis.

As described above, the hexagonal crystal structure of the complex tungsten oxide is formed of an assembly of many single units, each one of which is formed by the element M being positioned in a hexagonal void (tunnel) made of O atoms, where the hexagonal void is formed of an assembly of six octahedrons each of which is formed of W and six O atoms as a unit, that is, the hexagonal void is formed of an assembly of octahedrons in each of which O atoms are positioned on the vertices and a W atom is positioned in the center. The hexagonal void is parallel with the (001) plane. The (001) plane is perpendicular to the c-axis. The hexagonal void (tunnel) is open in the direction of the c-axis. On the other hand, the (100) plane, which is one of the planes parallel with the c-axis, is perpendicular to the (001) plane, so the element M cannot desorb via the (100) plane due to being blocked by the O and W atoms. Therefore, the element M cannot desorb via, for example, the (100) columnar plane of the hexagonal crystal parallel with the c-axis.

When a complex tungsten oxide particle of the present embodiment is observed via the (010) plane, the occupation ratio of the length of a side formed by a plane parallel with the c-axis among the sides surrounding the (010) plane is 60% or more. That is, the occupation ratio, which is the ratio of the length of the side formed by the plane parallel with the c-axis to the total length of the sides forming the outer periphery (outline) of the observed (010) plane of the particle is 60% or more.

Although a particle is three-dimensional, it is possible to know the planes constituting the particle by knowing the orientations of planes constituting the sides forming the outer periphery of a plane that is observed from a certain orientation. Therefore, in the present embodiment, by knowing the orientations of planes constituting the sides forming the outer periphery of the (010) plane of a complex tungsten oxide particle in an observation of the particle via the (010) plane via which the element M cannot desorb, it is possible to know whether the particle would easily let the element M desorb from itself or not. The orientations of the planes of a particle can be inspected using a Transmission Electron Microscope (TEM).

When the sides surrounding the (010) plane in an image of a hexagonal complex tungsten oxide particle observed via the (010) plane include many planes_parallel with the c-axis, desorption of the element M can be prevented. On the other hand, via any plane that has a c-axis component such as the (001) plane and the (102) plane, the element M may easily desorb, because the aforementioned hexagonal void (tunnel) is open to the outside of the particle in such a plane.

By adjusting the occupation ratio of the length of a side formed by a plane parallel with the c-axis among the sides surrounding the (010) plane when the complex tungsten oxide particles of the present embodiment are observed via the (010) plane to 60% or more, it is possible to decrease planes having a c-axis component, such as the (001) plane and the (102) plane. As a result, it is possible to inhibit desorption of the element M from the complex tungsten oxide particles of the present embodiment.

The desorption of the element M from the complex tungsten oxide particles occurs in a heat treatment during synthesis of the complex tungsten oxide particles, a reducing process step involving a heat treatment, or in a process of dispersing the complex tungsten oxide particles in a solvent for preparing a dispersion liquid.

In the process of heat treatment, the element M desorbs from the complex tungsten oxide particles by heat. In the process of preparing the dispersion liquid, the complex tungsten oxide particles collide with ceramic beads or the like serving as the stirring medium to loosen from aggregation and disperse into the solvent. In addition, the particles are broken apart by collision with the ceramic beads to form a new plane. If the new plane formed by the collision is a plane parallel with the c-axis of the complex tungsten oxide, the element M can be inhibited from desorption. However, if the plane formed by the breaking is a plane crossing the c-axis direction, for example, (001), the element M is eluted into the solvent during the dispersion treatment. Also, when the complex tungsten oxide particles are stirred in the solvent, the element M desorbs from a plane crossing the c-axis direction.

In order to inhibit the desorption of the element M in the process of heat treatment or the process of preparing the dispersion liquid, it is preferable that the occupation ratio, which is the occupation ratio of the length of a side formed by a plane parallel with the c-axis among the sides surrounding the (010) plane via which the particles are observed, is 60% or more in the complex tungsten oxide particles of the present embodiment.

The occupation ratio being 60% or more in the complex tungsten oxide particles that have been subjected to a heat treatment or a dispersion treatment also means that they are complex oxide particles in which any loss of the element M during the heat treatment, the dispersion treatment, or the like has been inhibited, i.e., that they are complex tungsten oxide particles that can suppress coloration in response to ultraviolet irradiation.

The occupation ratio being 60% or more in the complex tungsten oxide particles that have been subjected to a heat treatment or a dispersion treatment means the occupation ratio being 60% or more also in the complex tungsten oxide particles before being subjected to the heat treatment, the dispersion treatment, or the like.

(4) The amount of decrease of the element M through a dispersion treatment

As described above, the phenomenon of the complex tungsten oxide particles being colored in response to ultraviolet irradiation is under the effect of element M deficiency in the complex tungsten oxide particles, and such deficiency occurs when the complex tungsten oxide particles are subjected to a dispersion treatment or the like.

Therefore, when the complex tungsten oxide particles of the present embodiment are subjected to a dispersion treatment for being dispersed in a dispersion medium, it is preferable that the amount of decrease of M/W, which is the molar ratio of the element M (M) to tungsten (W), through the dispersion treatment, as compared with the ratio before the dispersion treatment is 0.1 or less.

The amount of decrease is obtained by calculating the M/W difference between before and after the dispersion treatment. When the amount of decrease of M/W is 0.1 or less, it means that element M loss through the dispersion treatment has been successfully suppressed, resulting in complex tungsten oxide particles having less element M deficiency. Therefore, the complex tungsten oxide particles can suppress coloration in response to ultraviolet irradiation.

Using 0.3 mm$\varphi$ZrO$_2$ beads, the above dispersion treatment can be performed for 0.5 hours or longer with 1 by% by mass of the complex tungsten oxide particles to be evaluated, 1 by% by mass of an amine-based acrylic copolymer polymeric dispersant, and the balance being methyl isobutyl ketone serving as a dispersion medium.

[Method for Producing Complex Tungsten Oxide Particles]

An outline of the method of the present embodiment for producing complex tungsten oxide particles will now be described.

According to the method of the present embodiment for producing complex tungsten oxide particles, the above-described complex tungsten oxide particles can be produced. Therefore, the description of any matters that have been already described will be omitted. Here, only a configuration example of the method for producing complex tungsten oxide particles will be described below, so the method for producing the complex tungsten oxide particles described above is not limited to the following configuration example.

As the method of the present embodiment for producing complex tungsten oxide particles, a method that can directly synthesize complex tungsten oxide particles having a particle diameter of 1 um or less is preferable. If the complex tungsten oxide particles having a particle diameter of 1 um or less can be directly synthesized, particles that are less affected by damage due to grinding and dispersion, for example, complex tungsten oxide particles having a particle diameter of 800 nm or less can be obtained. If the complex tungsten oxide particles can be ground with less damage, it is possible to suppress generation of planes having c-axis components due to grinding.

As the method for directly synthesizing complex tungsten oxide particles having a particle diameter of 1 um or less, a method for synthesizing particles by feeding a raw material containing an element M source and a tungsten element source into an electric furnace, a flame, or plasma is preferable.

Therefore, the method of the present embodiment for producing complex tungsten oxide particles can include a raw material preparation step, an aerosol formation step, and a heat treatment step described below.

In the raw material preparation step, a raw material containing an element M source and a tungsten element source can be prepared.

In the aerosol formation step, the raw material prepared in the raw material preparation step can be aerosolized.

In the heat treatment step, the aerosolized raw material can be heat-treated in a reaction field.

(1) About each step

Hereinafter, each step of the method of the present embodiment for producing complex tungsten oxide particles will be described.

(1-1) Raw Material Preparation Step

In the raw material preparation step, a raw material containing an element M source and a tungsten element source (hereinafter, also referred to as "element W source") can be prepared.

In the raw material preparation step, the raw material can be blended and prepared such that the ratio between the mole number of the element M and the mole number of the element W contained in the raw material corresponds to the intended complex tungsten oxide particle composition.

The state of the raw material prepared in the raw material preparation step is not particularly limited. It may be a liquid or a powder, and it is preferable that the raw material can form an aerosol by spraying or the like. The aerosol means a mixture of minute liquid or solid particles floating in a gas with the surrounding gas.

When the raw material is a liquid, it is possible to prepare the raw material, for example, by preparing a solution containing an element M source and an element W source.

Alternatively, a solution containing an element M source and a solution containing an element W source may be previously prepared separately, and both of the solutions may be mixed in the raw material preparation step to form a raw material mixed solution serving as the raw material.

For example, the raw material may be supplied to the heat treatment step described later in the form of liquid droplets. In this case, it is possible to perform the raw material preparation step by mixing the solution containing the element M source and the solution containing the element W source immediately before supplying them to a liquid droplet forming part (liquid droplet forming means) for forming the liquid droplets, or in the liquid droplet forming part. In the liquid droplet forming part, the aerosol formation step described later can be performed.

For example, when previously mixing the solution containing the element M source and the solution containing the element W source causes a problem such as gelation, it is preferable to prepare both solutions previously as described above, and mix them immediately before the aerosol formation step. In a case of performing the raw material preparation step immediately before the aerosol formation step, it is possible to adjust the molar ratio of the element M to the element W in the raw material within a desired range by adjusting the concentrations of both solutions and the liquid feed rate at which both solutions are fed to the liquid droplet forming part.

In a case of performing the raw material preparation step immediately before the aerosol formation step as described above, the aerosol formation step and the raw material preparation step need not be clearly distinguished, and both steps can be performed without interruption therebetween.

In a case of mixing the solution containing the element M source and the solution containing the element W source in the raw material preparation step as described above, the specific method of mixing is not particularly limited, and a desirably selected method can be used.

The element W source is not particularly limited, and a salt of tungsten or the like can be used, and, for example, hexacarbonyl tungsten can be preferably used. Hexacarbonyl tungsten can be expressed as, for example, $W(CO)_6$. As the solution containing the element W source, an organic solution containing the element W source can be preferably used from the viewpoint of ease of handling or the like.

As the solution containing the element M source, for example, a solution of a salt containing the element M can be used. The type of the salt of the element M serving as the element M source is not particularly limited. For example, one or more types selected from carbonate, acetate, nitrate, hydroxide, and the like of the element M can be used.

As the solution containing the element M source, an ethanol solution containing the element M source can be preferably used from the viewpoint of ease of handling.

For example, also when the element M is cesium, one or more types selected from carbonate, acetate, nitrate, hydroxide, and the like can be used as the salt of the element M source. Yet, acetate is particularly suitable. This is because it is particularly easy to dissolve cesium acetate in ethanol.

The ratio of the element M to 1 mol of tungsten in the complex tungsten oxide to be obtained, i.e., the dope amount is determined by the ratio between the element W source and the element M source during formation of the raw material mixed solution. For this reason, the dope amount can be controlled by, for example, the concentration of the solution containing the element W source, the concentration of the solution containing the element M source, and the like.

The concentration of the element W source to be contained in the solution containing the element W source, that is, the concentration of the salt of the element W or the like, is not particularly limited. For example, the tungsten concentration of the solution containing the element W source is preferably 0.001 mol/L or more and 10 mol/L or less, more preferably 0.01 mol/L or more and 10 mol/L or less, and yet more preferably 0.01 mol/L or more and 1 mol/L or less. This is because, by setting the tungsten concentration of the solution containing the element W source to 0.001 mol/L or more, it is possible to secure a sufficient production amount of the complex tungsten oxide particles per unit time, and to recover a sufficient amount by, for example, a filter or the like, thereby improving productivity. Moreover, by setting the tungsten concentration of the solution containing the element W source to 10 mol/L or less, it is possible to inhibit reprecipitation of the dissolved element W source, to inhibit aggregation of produced particles, and to inhibit mixing of coarse complex tungsten oxide particles equal to or more than, for example, 1 um. Additives such as a pH adjusting agent, a surfactant, and the like can be added to the solution containing the element W source.

The concentration of the element M source to be contained in the solution containing the element M source is not particularly limited, and can be selected in accordance with a desired composition of the complex tungsten oxide particles to be produced, the concentration of the element W source contained in the solution containing the element W source, and the like.

A desirably selected component other than the solution containing the element W source and the solution containing the element M source can also be added to the raw material mixed solution.

Although the case where the raw material is a liquid has been described as an example, the raw material may be a solid, for example, a powder. When the raw material is a powder, it is possible to prepare the raw material by, for example, mixing a powder of an element M compound with a powder of a tungsten compound. Further, for example, a precursor powder obtained by adding a tungsten compound powder to a solution containing an element M source, stirring the resulting product, and removing the solvent by drying or the like can be used as the raw material.

When the raw material is a solid, the element W source is not particularly limited, and a salt of tungsten or the like can be used, and, for example, $H_2WO_4$ or ammonium paratungstate can be preferably used.

In $H_2WO_4$, the elements other than tungsten are H (hydrogen) and O (oxygen), and the elements other than tungsten are discharged outside the system in the heat treatment step described later. Therefore, the use of $H_2WO_4$ as the element W source is preferable because it is possible to obtain complex tungsten oxide particles with decreased mixing of impurities.

As the element M source, for example, a powder of a salt containing the element M can be used. The type of the salt containing the element M is not particularly limited. For example, one or more types selected from carbonate, acetate, nitrate, hydroxide, and the like of the element M can be used.

For example, also when the element M is cesium, one or more types selected from carbonate, acetate, nitrate, hydroxide, and the like can be used. Yet, carbonate is particularly suitable.

(1-2) Aerosol Formation Step

In the method of the present embodiment for producing complex tungsten oxide particles, it is preferable that the raw material prepared in the raw material preparation step is supplied to the heat treatment step as an aerosol. More specifically, it is preferable that the aerosol is conveyed by a carrier gas such as oxygen and supplied to the heat treatment step.

Therefore, the method of the present embodiment for producing complex tungsten oxide particles may also include the aerosol formation step in which the raw material is changed to an aerosol containing liquid droplets or particles of the raw material.

The means or method for forming the aerosol in the aerosol formation step is not particularly limited, and can be selected in accordance with the state of the raw material and the like.

When the raw material is a liquid, it is possible to form an aerosol by spraying the liquid, which is the raw material, toward the carrier gas using various atomizers such as a centrifugal atomizer or a two-fluid nozzle. Furthermore, liquid droplets can be formed by ultrasonic irradiation to the liquid.

When the raw material is a powder, the aerosol can be formed by a device configured to form a dispersion state of the powder, which is the raw material, and supply the powder into an air flow. For example, the aerosol can be formed by an aerosol forming device including a stirring part such as a rotating brush or a stirring blade, and a powder supply part including a piston or a screw feeder for feeding the raw material to the stirring part. The powder as the raw material supplied from the powder supply part is dispersed into particles constituting the powder by the stirring part, and an aerosol can be generated from the powder as the raw material by the particles being fed to a carrier gas. The rotational speed of the brush or the stirring blade of the stirring part can be selected such that the powder as the raw material can be dispersed into particles, and it is preferable to rotate the stirring part at a high speed.

In a case of forming liquid droplets dispersed in a gas in the aerosol formation step, the size of the liquid droplets to be formed is not particularly limited, but the diameter of the liquid droplets is preferably 100 um or less, more preferably 10 um or less, and more preferably 5 um or less. By setting the diameter of the liquid droplets to 100 um or less, it is possible to inhibit the complex tungsten oxide particles to be obtained from being coarse particles, and to obtain complex tungsten oxide particles of the nanometer order. The lower limit of the size of the liquid droplets formed in the aerosol formation step is not particularly limited. However, since it is difficult to form very small liquid droplets and there is a risk of lowering productivity, the lower limit is preferably, for example, 1 um or more.

In a case of forming solid particles dispersed in a gas in the aerosol formation step, the size of the particles is not particularly limited, yet the diameter of the particles is preferably 100 um or less, more preferably 10 um or less, and still more preferably 3 um or less. By setting the diameter of the particles to 100 um or less, it is possible to more reliably apply heat treatment to the deeply inside part of the particles. The diameter of the particles can be measured similarly to the particle diameter of the complex tungsten oxide particles described above.

(1-3) Heat Treatment Step

In the heat treatment step, the raw material can be heat-treated to form the complex tungsten oxide particles from the raw material. In the heat treatment step, it is only necessary to be able to heat-treat the raw material at a temperature of 500°C or higher, and the configuration of the heat source is not particularly limited. Therefore, the heat treatment step can be performed by a method of guiding the raw material into a flame using a carrier gas or a method of guiding the raw material into a tubular electric furnace. Both in the case of using a flame and the case of using an electric furnace, the heat treatment temperature can be set to 500°C or higher. Through the heat treatment at 500°C or higher, the compounds contained in the raw material decompose and tungsten and the element M react to form a complex tungsten oxide.

A heat treatment temperature of 500°C or higher is sufficient for initiating the reaction between tungsten and the element M. However, a temperature of 550°C or higher is preferable, and 1,000°C or higher is more preferable. The upper limit of the heat treatment temperature is not particularly limited, yet, from the viewpoint of saving energy consumption, the upper limit is preferably 1,500°C or lower.

In the heat treatment step, a flame can be used as described above, and the raw material can be heat-treated using the flame. Use of the flame in the heat treatment step makes it possible to select the particle diameter of the complex tungsten oxide particles to be obtained, through adjustment of the temperature of the flame reaction field.

In a case of synthesizing complex tungsten oxide particles by spraying a liquid raw material into a carrier gas to form liquid droplets and guiding the raw material into a flame, the liquid droplets, which are the raw material, move through the flame by the carrier gas such as oxygen gas. Then, when the liquid droplets, which are the raw material, are conveyed into the flame, the solvent such as an organic solvent containing the element W source and the element M source, which are the raw material, combusts, and the solvent is decomposed by the combustion reaction. The heat generated by the combustion reaction contributes to the decomposition reaction of the element W source and the element M source, which precipitate in the process of being cooled at the flame tail of the flame field.

As described above, examples of the element W source include hexacarbonyl tungsten and the like, and examples of the element M source include cesium acetate and the like when the element M is cesium, and these salts decompose in the heat treatment step. Here, while W tends to precipitate easily as $WO_6$, Cs hardly forms an oxide as a monomer and passes through a filter and is discharged outside the system without being precipitated in the form of a nano-sized powder.

In the above case, in the decomposition process of the solute moiety, tungsten and the element M react and form a complex tungsten oxide.

In a case of using a flame in the heat treatment step, the conditions for forming the flame are not particularly limited. For example, the flame can be formed using a mixed gas containing oxygen and hydrocarbon. By forming a flame using a mixed gas containing oxygen and hydrocarbon, it is possible to form a flame having a stable temperature, and to produce complex tungsten oxide particles that have decreased variations in particle diameter and the like.

The method for adjusting the size of the flame and the temperature of the flame is not particularly limited. For example, it is preferable to adjust them by adjusting the flow rate ratio between oxygen and a combustible gas such as hydrocarbon in the mixed gas supplied to the flame to a flow rate ratio at which the combustible gas can combust, while adjusting the flow rates of both the gases. This is because it is possible to adjust the firepower while securing an amount of oxygen needed for combustion of the combustible gas.

For example, when a flame is formed using a mixed gas containing oxygen and propane, it is preferable that the flow rate ratio between propane and oxygen (burner) in the mixed gas is 5 or more to 8 or less, and the flow rate of propane is 0.5 L/min or more and 2 L/min or less. This is because when the flow rate of propane is 1, adjusting the flow rate of oxygen to 5 or more can sufficiently promote the combustion of propane, which is the combustible gas.
However, it is preferable to supply 8 or less of oxygen to 1 of propane such that the supply of oxygen is not excessive.

The heat treatment temperature of a flame reaction field or the like also affects the particle diameter of the complex tungsten oxide particles to be obtained.

This is estimated to be because thermal energy in a reaction field such as a flame or the like is used for sublimation of the produced complex tungsten oxide particles, and the particles pop upon sublimation, making it possible to obtain particles having a minute particle diameter.

The complex tungsten oxide particles obtained by the heat treatment can be recovered using, for example, a filter.

(1-4) Reducing Treatment Step

Particles obtained through the heat treatment step, specifically, complex tungsten oxide particles, may sometimes not exhibit infrared absorption characteristics. Therefore, the inventors of the present invention conducted a study, and as a result, found that the complex tungsten oxide particles obtained through the heat treatment step become able to exhibit infrared absorption characteristics by further being subjected to a reducing treatment step for performing a reducing treatment on the complex tungsten oxide particles.

Therefore, the method of the present embodiment for producing complex tungsten oxide particles may also include a reducing treatment step for reducing the particles obtained through the heat treatment step in an atmosphere containing a reducing gas. Specifically, for example, the method of the present embodiment for producing complex tungsten oxide particles may include a reducing treatment step for performing a reducing treatment in an atmosphere containing a reducing gas at a temperature in a range higher than 400°C and lower than 700°C after the heat treatment step.

Although the conditions of the reducing treatment are not particularly limited, it is preferable to select the conditions of the reducing treatment such that the crystal structure would not change between before and after the reducing treatment step and metal tungsten or the like would not precipitate in an X-ray diffraction pattern analysis of the complex tungsten oxide particles performed after the reducing treatment.

In the reducing treatment step, it is possible to reduce the complex tungsten oxide particles obtained in the heat treatment step by subjecting them to raising the temperature and lowering the temperature in a reducing atmosphere containing a reducing gas, that is, by performing a heat treatment.

During the reducing treatment step, the complex tungsten oxide particles may be stirred or left to stand still, and it is possible to appropriately select how to handle the complex tungsten oxide particles in the reducing treatment step. Yet, it is preferable to select the handling conditions such that metal tungsten would not precipitate.

The temperature of the reducing treatment (reducing treatment temperature) is preferably more than 400°C, more preferably 500°C or more, and yet more preferably 550°C or more.

The upper limit of the temperature of the reducing treatment is also not particularly limited, yet, for example, is preferably less than 700°C, more preferably 650°C or less, and yet more preferably less than 650°C or less.

In the case where the raw material is a liquid, the particle size to be obtained becomes small when the raw material concentration is low in the aerosol formation step. Since the particles having a small diameter are easy to reduce, it is possible to use a lower temperature in the reducing treatment step, compared to conventional methods. In the reducing treatment step, it is possible to raise the temperature from room temperature to the reducing treatment temperature and then lower the temperature to room temperature again.

The reducing condition can be determined based on the optical properties of the complex tungsten oxide particles to be obtained.

By setting the reducing treatment temperature to be higher than 400°C, it is possible to bring forward the reducing treatment of the complex tungsten oxide particles and to make them exhibit the infrared absorption characteristic more reliably. By setting the reducing temperature to be lower than 700°C, it is possible to inhibit the complex tungsten oxide particles from being reduced to metal tungsten.

The reducing atmosphere is preferably an atmosphere of a mixed gas of an inert gas such as argon and a reducing gas such as $H_2$ gas (hydrogen gas). The reducing gas is preferably $H_2$ gas.

In a case of using $H_2$ gas as the reducing gas, the content of $H_2$ gas in the reducing atmosphere can be appropriately selected. Yet, the content of $H_2$ gas is preferably in a range of 0.1% or more and 10% or less by volume proportion, and more preferably in a range of 2% or more and 10% or less. Care should be taken when performing reduction in an atmosphere containing only a reducing gas, because the reducing reaction may excessively proceed and metal tungsten may precipitate.

The time of the reducing treatment step is preferably 30 minutes or more as a total time from temperature raising to temperature lowering. The upper limit of the time of the reducing treatment step is not particularly limited, and, for example, it is preferable to select the time by conducting a preliminary test or the like so as to prevent over-reduction. Here, the total time from temperature raising to temperature lowering means a time from the start of temperature raising from room temperature up to the reducing treatment temperature until cooling to room temperature. It is preferable that the complex tungsten oxide particles are placed in the reducing atmosphere described above throughout this time.

By carrying out the reducing treatment step in this manner, it is possible to convert an unintended heterogenous phase in the complex tungsten oxide particles obtained through the heat treatment into the intended complex tungsten oxide phase.

(2) Apparatus suitably used in the Method for Producing Complex Tungsten Oxide Particles

(2-1) Complex Material Production Apparatus

An example of the configuration of a complex material production apparatus that is suitable for the method of the present embodiment for producing complex tungsten oxide particles will be described below.

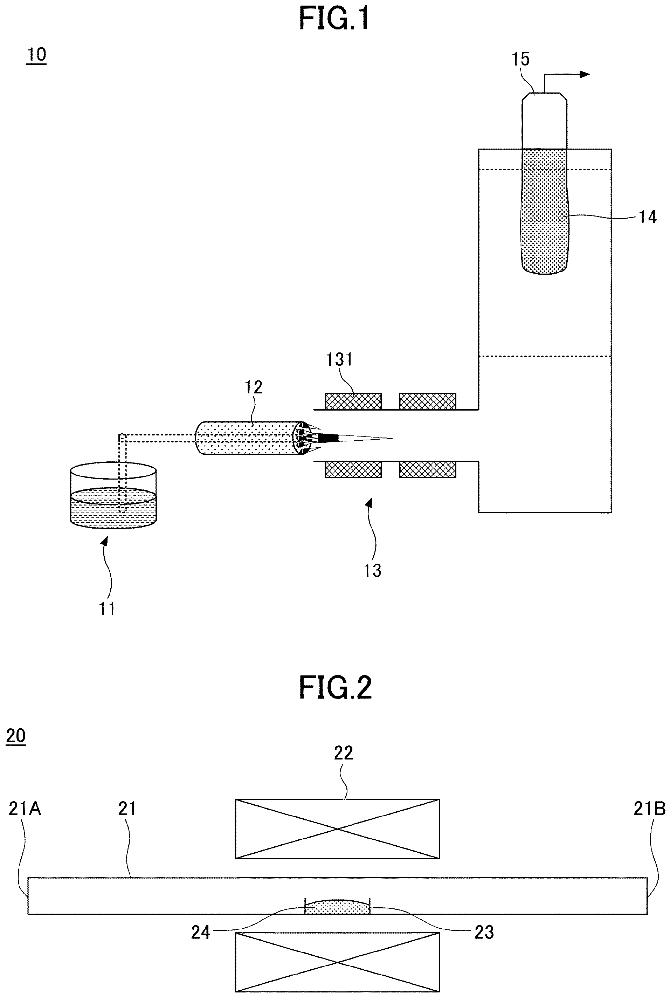

FIG. 1 is a diagram exemplarily illustrating the complex material production apparatus 10 of the present embodiment.

The complex material production apparatus 10 includes a first storage 11 storing a solution containing an element M and the element tungsten, which is a solution serving as a raw material, a two-fluid nozzle 12 for forming liquid droplets of the raw material and also forming a flame, and a reaction tube 13 connected to a filter 14 for recovering complex tungsten oxide particles formed.

It is possible to form an aerosol by supplying the raw material solution and a carrier gas to the two-fluid nozzle 12 (aerosol formation step). For example, oxygen and hydrocarbon are supplied to the two-fluid nozzle 12 to form a flame reaction field, and a formed aerosol can be supplied into the flame for heat treatment (heat treatment step). A cooling water piping 131 is provided around the reaction tube 13, and cooling water is circulated in the pipe. Complex tungsten oxide particles introduced into the reaction tube 13 are recovered by a filter 14 such as a bag filter.

An ejector 15 may be provided on the most downstream side to adjust the supply amount of the carrier gas.

Here, a configuration example of a complex material apparatus configured to form liquid droplets of the raw material, perform heat treatment of the liquid droplets using a flame to form complex tungsten oxide particles has been illustrated. However, this configuration is non-limiting. The raw material may be a powder or the like, and the heat source used in the heat treatment may be an electric furnace or the like.

(2-2) Reducing Treatment Apparatus

In the reducing treatment apparatus, the aforementioned reducing treatment step can be performed.

The reducing treatment apparatus needs only to be able to perform the aforementioned reducing treatment step, and is not particularly limited. For example, it may be provided with a container for storing complex tungsten oxide particles that are particles obtained in the above-described complex material production apparatus, a gas pipe for supplying a mixed gas into the container for bringing about a reducing atmosphere, and a heat source for heating the container.

It is also possible to evacuate the container by introducing the mixed gas for bringing about a reducing atmosphere, and place the complex tungsten oxide particles, which are the object to be treated, under an air flow of the mixed gas. In this case, a supply pipe for supplying the mixed gas and an exhaust pipe may be provided as gas pipes so as to be able to form the air flow.

A stirring blade for stirring the complex tungsten oxide particles in the container may also be used.

FIG. 2 is a view exemplarily illustrating an example of a configuration of the reducing treatment apparatus, and is a cross-sectional view of a reducing treatment apparatus 20 across a plane passing through the central axis of a reaction tube 21.

The reducing treatment apparatus 20 is a horizontal tubular furnace, and can be used with a gas introduction pipe (not illustrated) attached to one port 21A of the reaction tube 21 and a gas exhaust pipe (not illustrated) attached to the other port 21B of the tubular furnace. Then, a mixed gas for bringing about a reducing atmosphere may be supplied from the one port 21A side, to bring about a reducing atmosphere in the interior of the reaction tube 21.

A heater 22 can be provided around the reaction tube 21, and the complex tungsten oxide particles can be put in a ceramic container 23 such as a boat and placed at a position corresponding to the heater 22 in the reaction tube 21 of the tubular furnace.

Using the reducing treatment apparatus 20, it is possible to perform a reducing treatment of the complex tungsten oxide particles 24 put in the container 23 by bringing about a reducing atmosphere into the interior of the reaction tube 21 and heating the particles to a desired temperature by the heater 22.

[Near-infrared-absorbing Particle Dispersion Liquid]

Next, a configuration example of a near-infrared-absorbing particle dispersion liquid of the present embodiment will be described.

The near-infrared-absorbing particle dispersion liquid of the present embodiment can contain near-infrared-absorbing particles and a liquid medium. As the near-infrared-absorbing particles, the above-described complex tungsten oxide particles can be used.

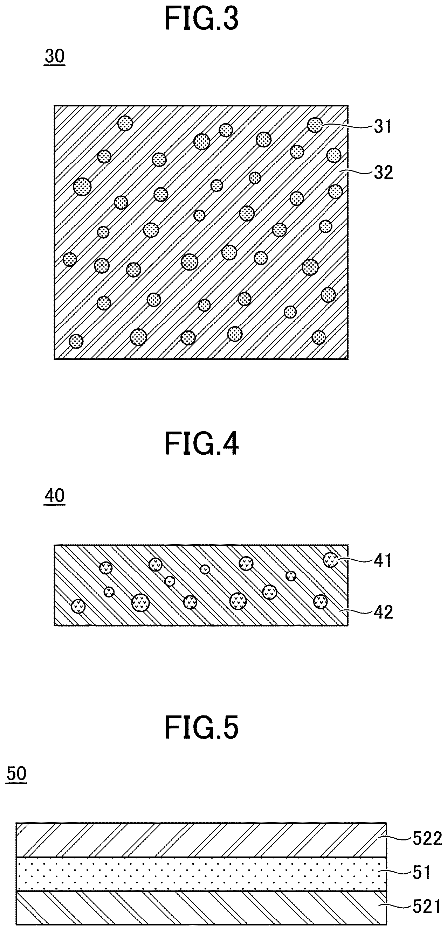

As the liquid medium, for example, one or more types selected from water, organic solvents, fats and oils, liquid resins, and liquid plasticizers can be used. For example, as illustrated in FIG. 3, the near-infrared-absorbing particle dispersion liquid 30 of the present embodiment can contain near-infrared-absorbing particles 31 and the liquid medium 32. The near-infrared-absorbing particle dispersion liquid preferably has a configuration in which the near-infrared-absorbing particles are dispersed in the liquid medium.

FIG. 3 is an exemplary diagram, and the near-infrared-absorbing particle dispersion liquid of the present embodiment is not limited to this form. For example, in FIG. 3, the near-infrared-absorbing particles 31 are represented by circles and are depicted as spherical particles. However, the shape of the near-infrared-absorbing particles 31, which are the complex tungsten oxide particles described above, is not limited to this form and can have any shape. The near-infrared-absorbing particles 31 may have, for example, a coating or the like on the surface. The near-infrared-absorbing particle dispersion liquid 30 may contain other additives as needed, in addition to the near-infrared-absorbing particles 31 and the liquid medium 32.

As described above, one or more types selected from water, organic solvents, fats and oils, liquid resins, and liquid plasticizers can be used as the liquid medium.

As the organic solvent, various types such as alcohols, ketones, esters, hydrocarbons, and glycols can be selected. Specific examples may be one or more types selected from: alcohol-based solvents such as isopropyl alcohol, methanol, ethanol, 1-propanol, isopropanol, butanol, pentanol, benzyl alcohol, diacetone alcohol, and 1-methoxy-2-propanol; ketone-based solvents such as dimethyl ketone, acetone, methyl ethyl ketone, methyl isopropyl ketone, methyl isobutyl ketone, cyclohexanone, and isophorone; ester-based solvents such as 3-methylmethoxy-propionate, and butyl acetate; glycol derivatives such as ethylene glycol monomethyl ether, ethylene glycol monoethyl ether, ethylene glycol isopropyl ether, propylene glycol monomethyl ether, propylene glycol monoethyl ether, propylene glycol methyl ether acetate, and propylene glycol ethyl ether acetate; amides such as formamide, N-methyl formamide, dimethyl formamide, dimethyl acetamide, and N-methyl-2-pyrroidone; aromatic hydrocarbons such as toluene and xylene; and halogenated hydrocarbons such as ethylene chloride and chlorobenzene.

Of these, organic solvents having a low polarity are preferable, and in particular, isopropyl alcohol, ethanol, 1-methoxy-2-propanol, dimethyl ketone, methyl ethyl ketone, methyl isobutyl ketone, toluene, propylene glycol monomethyl ether acetate, n-butyl acetate and the like are more preferable. One of these organic solvents can be used, or two or more of these organic solvents can be used in combination.

As the fats and oils, one or more types selected from, for example, drying oils such as linseed oil, sunflower oil, and tung oil, semi-drying oils such as sesame oil, cottonseed oil, rapeseed oil, soybean oil, and rice bran oil, non-drying oils such as olive oil, palm oil, and dehydrated castor oil, fatty acid monoesters obtained by directly esterifying fatty acids of vegetable oils with monoalcohols, ethers, and petroleum solvents such as Isopar (registered trademark) E, Exol (registered trademark) Hexane, Heptane, E, D30, D40, D60, D80, D95, D110, and D130 (available from Exxon Mobil Corporation) can be used.

As the liquid resin, one or more types selected from liquid acrylic resins, liquid epoxy resins, liquid polyester resins, liquid urethane resins, and the like can be used.

As the liquid plasticizer, for example, liquid plasticizers for plastics and the like can be used.

The components contained in the near-infrared-absorbing particle dispersion liquid are not limited to the near-infrared-absorbing particles described above and the liquid medium. The near-infrared-absorbing particle dispersion liquid can further contain optional components.

For example, an acid or an alkali may be added to the near-infrared-absorbing particle dispersion liquid as needed to adjust the pH of the dispersion liquid.

Further, in order to further improve the dispersion stability of the near-infrared-absorbing particles and to avoid coarsening of the dispersed particle diameter due to re-aggregation in the above-described near-infrared-absorbing particle dispersion liquid, various surfactants, coupling agents, and the like may be added as dispersants to the near-infrared-absorbing particle dispersion liquid.

The dispersants such as the surfactants, coupling agents, and the like can be selected according to the application, yet it is preferable that the dispersant has one or more types of functional groups selected from an amine-containing group, a hydroxyl group, a carboxyl group, and an epoxy group. These functional groups adsorb to the surface of the near-infrared-absorbing particles to prevent aggregation, and have the effect of dispersing the near-infrared-absorbing particles uniformly even in an infrared shielding film formed by using the near-infrared-absorbing particles. A polymeric dispersant having one or more types selected from the above functional groups (group of functional groups) in a molecule is more desirable.

Examples of suitable commercially available dispersants include one or more types selected from Solsperse (registered trademark) 9000, 12000, 17000, 20000, 21000, 24000, 26000, 27000, 28000, 32000, 35100, 54000, and 250 (available from Japan Lubrizol Corporation), EFKA (registered trademark) 4008, 4009, 4010, 4015, 4046, 4047, 4060, 4080, 7462, 4020, 4050, 4055, 4400, 4401, 4402, 4403, 4300, 4320, 4330, 4340, 6220, 6225, 6700, 6780, 6782, and 8503 (available from Efka Additives B.V.), Ajisper (registered trademark) PA111, PB821, PB822, PN411, and Famex L-12 (available from Ajinomoto Fine-Techno Co, Inc.), Disper BYK (registered trademark) 101, 102, 106, 108, 111, 116, 130, 140, 142, 145, 161, 162, 163, 164, 166, 167, 168, 170, 171, 174, 180, 182, 192, 193, 2000, 2001, 2020, 2025, 2050, 2070, 2155, 2164, 220S, 300, 306, 320, 322, 325, 330, 340, 350, 377, 378, 380N, 410, 425, and 430 (available from Byk Chemie Japan Co., Ltd.), Disparlon (registered trademark) 1751N, 1831, 1850, 1860, 1934, DA-400N, DA-703-50, DA-725, DA-705, DA-7301, DN-900, NS-5210, and NVI-8514L (available from Kusumoto Chemicals, Ltd.), and ALFON (registered trademark) UC-3000, UF-5022, UG-4010, UG-4035, and UG-4070 (available from Toagosei Co., Ltd.).

The method for dispersing the near-infrared-absorbing particles in the liquid medium is not particularly limited as long as the method is capable of dispersing the near-infrared-absorbing particles in the liquid medium. In this case, it is preferable that the near-infrared-absorbing particles can be dispersed such that the average particle diameter thereof is 200 nm or less, and it is more preferable that the particles can be dispersed such that the average particle diameter thereof is 0.1 nm or more and 200 nm or less.

Examples of the method for dispersing the near-infrared-absorbing particles in the liquid medium include a dispersion treatment method using an apparatus such as a bead mill, a ball mill, a sand mill, a paint shaker, and an ultrasonic homogenizer. Among them, grinding/dispersion using a medium stirring mill such as a bead mill, a ball mill, a sand mill, and a paint shaker using a medium (beads, balls, and Ottawa sand) is preferable from the viewpoint of shortening the time taken to obtain a desired average particle size. By the grinding dispersion treatment using a medium stirring mill, at the same time as dispersion of the near-infrared-absorbing particles in the liquid medium, grinding to more minute particles due to collision between the near-infrared-absorbing particles and collision of the medium with the near-infrared-absorbing particles proceeds, making it possible to disperse the near-infrared-absorbing particles as more minute particles. That is, the particles are ground and dispersed.

The average particle diameter of the near-infrared-absorbing particles is preferably 0.1 nm or more 200 nm or less as described above. This is because, when the average particle diameter is small, light being scattered in the visible light range in the wavelength range of 400 nm or more and 780 nm less due to geometric scattering or Mie scattering decreases, and as a result, a near-infrared-absorbing particle dispersion body that is obtained by using, for example, the near-infrared-absorbing particle dispersion liquid of the present embodiment, and in which the near-infrared-absorbing particles are dispersed in a resin or the like, can avoid becoming like frosted glass unable to have a clear transparency. That is, the average particle diameter of 200 nm or less is preferable because this particle diameter is in the Rayleigh scattering mode, in which the geometric scattering or Mie scattering mode is attenuated, and the light to be scattered is in proportion to the 6th power of the dispersed particle diameter, which means that transparency is improved as the dispersed particle diameter decreases and scattering decreases. An average particle diameter of 100 nm or less is preferable because light to be scattered is very scarce. An average particle diameter of 30 nm or less is yet more preferable.

The dispersion state of the near-infrared-absorbing particles in the near-infrared-absorbing particle dispersion body that is obtained by using the near-infrared-absorbing particle dispersion liquid of the present embodiment, and in which the near-infrared-absorbing particles are dispersed in a solid medium such as a resin, would not become a more aggregated state than the average particle diameter of the near-infrared-absorbing particles in the dispersion liquid as long as the dispersion liquid is added to the solid medium in a publicly-known manner.

When the average particle diameter of the near-infrared-absorbing particles is 0.1 nm or more and 200 nm or less, it is possible to avoid the production of the near-infrared-absorbing particle dispersion body its molded products (such as plates and sheets) that exhibit a monotonous decrease in transmittance, otherwise resulting in a gray appearance.

The content of the near-infrared-absorbing particles in the near-infrared-absorbing particle dispersion liquid of the present embodiment is not particularly limited, yet is preferably, for example, 0.01% by mass or more and 80% by mass or less. This is because when the content of the near-infrared-absorbing particles is 0.01% by mass or more, a sufficient solar transmittance can be exhibited, that is, the solar transmittance can be sufficiently suppressed. When the content is 80% by mass or less, the near-infrared-absorbing particles can be uniformly dispersed in the dispersion medium.

[Near-Infrared Absorbing Particle Dispersion Body]

Next, a configuration example of a near-infrared-absorbing particle dispersion body of the present embodiment will be described.

The near-infrared-absorbing particle dispersion body of the present embodiment contains near-infrared-absorbing particles and a solid medium. The above-described complex tungsten oxide particles can be used as the near-infrared-absorbing particles. Specifically, for example, as exemplarily illustrated in FIG. 4, the near-infrared-absorbing particle dispersion body 40 can contain near-infrared-absorbing particles 41 that are the above-described complex tungsten oxide particles and a solid medium 42, and the near-infrared-absorbing particles 41 can be positioned in the solid medium 42. In the near-infrared-absorbing particle dispersion body of the present embodiment, it is preferable that the near-infrared-absorbing particles are dispersed in the solid medium. FIG. 4 is an exemplary view and the near-infrared-absorbing particle dispersion body of the present embodiment is not limited to this form. For example, in FIG. 4, although the near-infrared-absorbing particles 41 are illustrated as spherical particles represented by circles, the shape of the near-infrared-absorbing particles 41 is not limited to this form and may be a desirably selected shape. The near-infrared-absorbing particles 41 may have, for example, a coating or the like on the surface. In addition to the near-infrared-absorbing particles 41 and the solid medium 42, the near-infrared-absorbing particle dispersion body 40 may contain other additives as needed.

Hereinafter, descriptions of the near-infrared-absorbing particle dispersion body according to the present embodiment will be given in the order of (1) Characteristics of the solid medium and the near-infrared-absorbing particle dispersion body, (2) Method for producing near-infrared-absorbing particle dispersion body, (3) Additives, and (4) Application examples.

(1) Characteristics of the solid medium and the near-infrared-absorbing particle dispersion body

Examples of the solid medium include medium resins such as thermoplastic resins, thermosetting resins, and ultraviolet curable resins. That is, resins can preferably be used as the solid medium.

The specific material of the resin used as the solid medium is not particularly limited, yet is preferably, for example, one resin selected from the resin group consisting of polyester resin, polycarbonate resin, acrylic resin, styrene resin, polyamide resin, polyethylene resin, vinyl chloride resin, olefin resin, epoxy resin, polyimide resin, fluororesin, ethylene-vinyl acetate copolymer, polyvinyl acetal resin, and ultraviolet curable resin, or a mixture of two or more resins selected from the resin group. As the polyester resin, polyethylene terephthalate resin can preferably be used.

These medium resins may also contain a polymeric dispersant containing one or more functional groups selected from a group containing amine in the main skeleton, a hydroxyl group, a carboxyl group, and an epoxy group.

The solid medium is not limited to the medium resin, and a binder that uses a metal alkoxide may be used as the solid medium. Alkoxides of Si, Ti, Al, Zr and the like are typical examples of the metal alkoxide. By hydrolyzing and polycondensing the binder that uses the metal alkoxide by heating or the like, it is possible to obtain a near-infrared-absorbing particle dispersion body in which the solid medium contains an oxide.

The content proportion of the near-infrared-absorbing particles in the near-infrared-absorbing particle dispersion body according to the present embodiment is not particularly limited, yet the near-infrared-absorbing particle dispersion body preferably contains 0.001% by mass or more and 80% by mass or less of the near-infrared-absorbing particles.

The shape of the near-infrared-absorbing particle dispersion body according to the present embodiment is not particularly limited, yet the near-infrared-absorbing particle dispersion body according to the present embodiment preferably has a sheet shape, a board shape, or a film shape. This is because the near-infrared-absorbing particle dispersion body having a sheet shape, a board shape, or a film shape can be applied to various applications.

(2) Method for producing near-infrared-absorbing particle dispersion body

A method for producing the near-infrared-absorbing particle dispersion body of the present embodiment will be described below. Here, only an example of the configuration of the method for producing the near-infrared-absorbing particle dispersion body is illustrated, and the method for producing the near-infrared-absorbing particle dispersion body described above is not limited to the following examples.

The near-infrared-absorbing particle dispersion body of the present embodiment can be produced using, for example, a masterbatch. In this case, the method for producing the near-infrared-absorbing particle dispersion body of the present embodiment can also include, for example, the following masterbatch manufacturing step.

In the masterbatch manufacturing step, a masterbatch in which the near-infrared-absorbing particles are dispersed in a solid medium can be manufactured.

The specific manufacturing method of the masterbatch is not particularly limited. For example, a masterbatch can be produced by dispersing the near-infrared-absorbing particle dispersion liquid or the near-infrared-absorbing particles in a solid medium and pelletizing the solid medium.

As the near-infrared-absorbing particles, a near-infrared-absorbing particle dispersion powder obtained by removing the liquid medium from the near-infrared-absorbing particle dispersion liquid may be used.

For example, a mixture is prepared by uniformly mixing the near-infrared-absorbing particle dispersion liquid, the near-infrared-absorbing particles, or the near-infrared-absorbing particle dispersion powder, a powder or a pellet of the solid medium, and, if necessary, other additives. Then, the mixture is kneaded using a single-screw or twin-screw vent extruder, and a melted extruded strand is cut and processed into a pellet shape. In this way, a masterbatch can be manufactured. In this case, the shape of the pellet can be cylindrical or prismatic. It is also possible to use a hot cut method of directly cutting a melt extrudate when producing a pellet. In this case, a resulting product typically has a shape close to a sphere.

When a near-infrared-absorbing particle dispersion liquid is used as a raw material in the masterbatch manufacturing step, it is preferable to decrease or remove the liquid medium derived from the near-infrared-absorbing particle dispersion liquid. In this case, the extent to which the liquid medium contained in the near-infrared-absorbing particle dispersion liquid is removed is not particularly limited. For example, it is preferable to remove the liquid medium from the near-infrared-absorbing particle dispersion liquid or the like to an amount that is allowed to remain in the masterbatch. When a liquid plasticizer is used as the liquid medium, the entire amount of the liquid plasticizer may remain in the near-infrared-absorbing particle dispersion body.

The method for decreasing or removing the liquid medium contained in the near-infrared-absorbing particle dispersion liquid from the near-infrared-absorbing particle dispersion liquid or a mixture of the near-infrared-absorbing particle dispersion liquid and the solid medium is not particularly limited. For example, it is preferable to carry out a drying step of drying the near-infrared-absorbing particle dispersion liquid or the like at decreased pressure. Specifically, the near-infrared-absorbing particle dispersion liquid or the like is dried at decreased pressure while being stirred, to separate the near-infrared-absorbing particle-containing composition and the liquid medium component from each other. An example of the apparatus used for the drying at decreased pressure is a vacuum stirring type dryer. However, any apparatus that has the above function may be used, and the apparatus is not particularly limited. The pressure value to which the pressure is decreased in the drying step is appropriately selected.

Use of the decreased pressure drying method is preferable because the efficiency for removing the liquid medium or the like derived from the near-infrared-absorbing particle dispersion liquid is improved, and because the near-infrared-absorbing particle dispersion powder to be obtained through the drying at decreased pressure and the near-infrared-absorbing particle dispersion liquid as the raw material are not to be exposed to a high temperature for a long time, so the near-infrared-absorbing particle dispersion powder and the near-infrared-absorbing particles dispersed in the near-infrared-absorbing particle dispersion liquid would not aggregate. The method is also preferable because the productivity of the near-infrared-absorbing particle dispersion powder and the like is improved, and from an environmental viewpoint since the evaporated solvent such as the liquid medium can be easily recovered.

In the near-infrared-absorbing particle dispersion powder and the like obtained through the drying step, it is preferable that a solvent component having a boiling point of 120°C or lower has been sufficiently removed. For example, the residual amount of the solvent component is preferably 2.5% by mass or lower. This is because when the residual solvent component is 2.5% by mass or lower, cells would not be generated in, for example, the near-infrared-absorbing particle dispersion body when the near-infrared-absorbing particle dispersion powder and the like are processed into the dispersion body, which can thus maintain a good appearance and good optical properties. In addition, when the residual solvent component in the near-infrared-absorbing particle dispersion powder is 2.5% by mass or lower, the near-infrared-absorbing particle dispersion powder has a long-term stability during a long-term storage in the powder state, without aggregation due to natural drying of the residual solvent component.

By kneading the obtained masterbatch with addition of a solid medium, it is possible to adjust its dispersion concentration while maintaining the dispersion state of the near-infrared-absorbing particles contained in the masterbatch, which is a near-infrared-absorbing particle dispersion body.

The method for producing the near-infrared-absorbing particle dispersion body according to the present embodiment may include, as needed, a molding step of molding the obtained masterbatch or the masterbatch to which a solid medium is added as described above, to form a near-infrared-absorbing particle dispersion body having a desired shape.

The specific method for molding into the near-infrared-absorbing particle dispersion body is not particularly limited, and a publicly-known method such as an extrusion molding method, an injection molding method or the like may be used.

In the molding step, for example, a near-infrared-absorbing particle dispersion body having a sheet shape, a board shape or a film shape resulting from molding into a flat surface shape or a curved surface shape can be produced. The method for molding into a sheet shape, a board shape or a film shape is not particularly limited, and various publicly-known methods may be used. For example, a roll calendering method, an extrusion method, a casting method, an inflation method or the like may be used.

The method for producing the near-infrared-absorbing particle dispersion body according to the present embodiment is not limited to the form including the masterbatch manufacturing step described above.

For example, the method for producing the near-infrared-absorbing particle dispersion body according to the present embodiment may be the form including the following steps.

A precursor liquid preparation step of preparing a near-infrared-absorbing particle dispersion body precursor liquid by mixing a solid medium precursor, which is a monomer or an oligomer of a solid medium, a solid medium that is liquid when uncured, or the like with near-infrared-absorbing particles, a near-infrared-absorbing particle dispersion powder, or a near-infrared-absorbing particle dispersion liquid.

A near-infrared-absorbing particle dispersion body production step of producing a near-infrared-absorbing particle dispersion body by curing the solid medium precursor such as the monomer by a chemical reaction such as condensation, polymerization or the like.

For example, when using an acrylic resin as the solid medium, it is possible to obtain the near-infrared-absorbing particle dispersion body precursor liquid by mixing an acrylic monomer or an acrylic ultraviolet-curable resin with near-infrared-absorbing particles.

Then, it is possible to obtain a near-infrared-absorbing particle dispersion body using an acrylic resin, by filling a predetermined mold or the like with the near-infrared-absorbing particle dispersion body precursor liquid and radical-polymerizing the precursor liquid.

Also in a case of using a resin that cures by crosslinking as the solid medium, it is possible to obtain a dispersion body by allowing the near-infrared-absorbing particle dispersion body precursor liquid to undergo a crosslinking reaction, as in the case of using the acrylic resin.

(3) Additives

In a case of using a resin as the solid medium, the near-infrared-absorbing particle dispersion body of the present embodiment can also contain publicly-known additives (additives) such as plasticizers, flame retardants, coloring inhibitors, fillers, and the like that are typically added to such resins. However, as described above, the solid medium is not limited to a resin, and a binder using a metal alkoxide can also be used.

The shape of the near-infrared-absorbing particle dispersion body of the present embodiment is not particularly limited, but can be, for example, a sheet shape, a board shape, or a film shape as described above.

In a case of using a near-infrared-absorbing particle dispersion body having a sheet shape, a board shape, or a film shape as an intermediate layer of a transparent substrate such as laminated glass, the solid medium contained in the near-infrared-absorbing particle dispersion body may, as is, not have a sufficient flexibility or a sufficient tight adhesiveness with the transparent substrate. In this case, it is preferable that the near-infrared-absorbing particle dispersion body contains a plasticizer. Specifically, for example, when the solid medium is a polyvinyl acetal resin and the purpose of use is the mentioned purpose, it is preferable that the near-infrared-absorbing particle dispersion body further contains a plasticizer.

As the above-described plasticizer, a substance used as a plasticizer in the solid medium used in the near-infrared-absorbing particle dispersion body of the present embodiment can be used. Examples of the plasticizer to be used in the near-infrared-absorbing particle dispersion body made of a polyvinyl acetal resin include a plasticizer that is a compound of a monovalent alcohol and an organic acid ester, an ester-based plasticizer such as a polyvalent alcohol organic acid ester compound, and a phosphoric acid-based plasticizer such as an organic phosphoric acid-based plasticizer. It is preferable that any of these plasticizers is liquid at room temperature. Among them, a plasticizer that is an ester compound synthesized from a polyvalent alcohol and a fatty acid is preferable.

(4) Application Examples

The near-infrared-absorbing particle dispersion body of the present embodiment can be used in various forms, and its use and application forms are not particularly limited. As application examples of the near-infrared-absorbing particle dispersion body of the present embodiment, a near-infrared-absorbing intermediate film, a near-infrared-absorbing laminate, and a near-infrared-absorbing transparent substrate will be described below.

(4-1) Near-Infrared-Absorbing Intermediate Film and Near-Infrared-Absorbing Laminate

A near-infrared-absorbing laminate of the present embodiment may have a laminated structure including the above-described near-infrared-absorbing particle dispersion body and a transparent substrate. The near-infrared-absorbing laminate of the present embodiment may include the above-described near-infrared-absorbing particle dispersion body and a transparent substrate as elements, and may be a laminate obtained by laminating these elements.

An example of the near-infrared-absorbing laminate is a laminate of two or more plurality of transparent substrates and the above-described near-infrared-absorbing particle dispersion body. In this case, the near-infrared-absorbing particle dispersion body may be positioned, for example, between transparent substrates and used as a near-infrared-absorbing intermediate film.

In this case, specifically, as illustrated in FIG. 5, which is an exemplary cross-sectional view of the transparent substrates and the near-infrared-absorbing particle dispersion body taken along the lamination direction, the near-infrared-absorbing laminate 50 may include a plurality of transparent substrates 521 and 522 and a near-infrared-absorbing particle dispersion body 51. The near-infrared-absorbing particle dispersion body 51 may be positioned between the plurality of transparent substrates 521 and 522. Although FIG. 5 illustrates an example having two transparent substrates 521 and 522, the present invention is not limited to such a configuration.

It is preferable that the near-infrared-absorbing particle dispersion body serving as the near-infrared-absorbing intermediate film has any shape selected from a sheet shape, a board shape, and a film shape.

As the transparent substrate, one or more types selected from plate glass, plate-like plastics, and film-like plastics that are transparent in the visible light range are suitable.

In a case of using plastic as the transparent substrate, the material of the plastic is not particularly limited and can be selected according to the application, and one or more types selected from, for example, polycarbonate resin, acrylic resin, polyester resin, polyamide resin, vinyl chloride resin, olefin resin, epoxy resin, polyimide resin, ionomer resin, fluororesin, and the like can be used. As the polyester resin, polyethylene terephthalate resin is suitable.

The transparent substrate may contain particles having a solar radiation shielding function. As the particles having a solar radiation shielding function, near-infrared-absorbing particles having a near infrared shielding property can be used.

By interposing the above-described near-infrared-absorbing particle dispersion body as an intermediate layer-constituting member sandwiched between the plurality of transparent substrates, it is possible to obtain a solar radiation-shielding laminated structure, which is one type of a near-infrared-absorbing laminate inhibited from coloring even in response to ultraviolet irradiation. It is also possible to obtain a solar radiation-shielding laminated structure, which is one type of a near-infrared-absorbing laminate that transmits a color with a more neutral color tone while suppressing the solar irradiation transmittance, and that can also secure transmissivity of the sensor wavelength.

It is also possible to obtain the above-described near-infrared-absorbing laminate by bonding and integrating the plurality of transparent substrates facing each other while sandwiching the near-infrared-absorbing particle dispersion body by a publicly-known method.

In a case of using the above-described near-infrared-absorbing particle dispersion body as the near-infrared-absorbing intermediate film, the solid medium described regarding the near-infrared-absorbing particle dispersion body can be used. However, from the viewpoint of increasing the tight adhesive strength between the near-infrared-absorbing intermediate film and the transparent substrates, the solid medium is preferably polyvinyl acetal resin.

The near-infrared-absorbing intermediate film of the present embodiment can be produced by the above-described method for producing the near-infrared-absorbing particle dispersion body, and can be, for example, a near-infrared-absorbing intermediate film having any of a sheet shape, a board shape, or a film shape.

When the near-infrared-absorbing intermediate film does not have sufficient flexibility or a sufficient tight adhesiveness with the transparent substrates, it is preferable to add a liquid plasticizer for a medium resin. For example, when the medium resin used in the near-infrared-absorbing intermediate film is a polyvinyl acetal resin, the addition of a liquid plasticizer for the polyvinyl acetal resin is beneficial for improving the tight adhesiveness with the transparent substrates.

As the plasticizer, a substance used as a plasticizer for a solid medium resin can be used. Examples of the plasticizer applied to the near-infrared-absorbing particle dispersion body using the polyvinyl acetal resin as the solid medium include a plasticizer that is a compound of a monovalent alcohol and an organic acid ester, an ester-based plasticizer such as a polyvalent alcohol organic acid ester compound, and a phosphoric acid-based plasticizer such as an organic phosphoric acid-based plasticizer. It is preferable that all of the plasticizers are liquid at room temperature. Among them, a plasticizer that is an ester compound synthesized from a polyvalent alcohol and a fatty acid is preferable.

In addition, at least one type selected from the group consisting of a silane coupling agent, a metal salt of a carboxylic acid, a metal hydroxide, and a metal carbonate can be added to the near-infrared-absorbing intermediate film. The metal that is a constituent of the metal salt of a carboxylic acid, the metal hydroxide, and the metal carbonate is not particularly limited, but is preferably at least one selected from sodium, potassium, magnesium, calcium, manganese, cesium, lithium, rubidium, and zinc. In the near-infrared-absorbing intermediate film, the content of at least one selected from the group consisting of the metal salt of a carboxylic acid, the metal hydroxide, and the metal carbonate is preferably 1% by mass or more and 100% by mass or less relative to the near-infrared-absorbing particles.

Furthermore, the near-infrared-absorbing intermediate film may optionally contain, in addition to the near-infrared-absorbing particles, at least one or more types of particles selected from oxide particles, complex oxide particles, and boride particles containing two or more elements selected from the group consisting of Sb, V, Nb, Ta, W, Zr, F, Zn, Al, Ti, Pb, Ga, Re, Ru, P, Ge, In, Sn, La, Ce, Pr, Nd, Gd, Tb, Dy, Ho, Y, Sm, Eu, Er, Tm, Tb, Lu, Sr, and Ca. The near-infrared-absorbing intermediate film can contain such particles in a range of 5% by mass or more and 95% by mass or less when the total amount of the particles and the near-infrared-absorbing particles is 100% by mass.

The near-infrared-absorbing laminate may contain an ultraviolet absorber in at least one layer of intermediate films positioned between the transparent substrates. Examples of the ultraviolet absorber include one or more types selected from a compound having a malonic ester structure, a compound having an anilide oxalate structure, a compound having a benzotriazole structure, a compound having a benzophenone structure, a compound having a triazine structure, a compound having a benzoate structure, a compound having a hindered amine structure, and the like.

Naturally, the intermediate layer of the near-infrared-absorbing laminate may be made only of the near-infrared-absorbing intermediate film according to the present embodiment.

The near-infrared-absorbing intermediate film described here is an embodiment of the near-infrared-absorbing particle dispersion body. Naturally, the near-infrared-absorbing particle dispersion body according to the present embodiment can be used without being sandwiched between two or more transparent substrates that transmit visible light. That is, the near-infrared-absorbing particle dispersion body according to the present embodiment can be established as a near-infrared-absorbing particle dispersion body by itself.

The near-infrared-absorbing laminate according to the present embodiment is not limited to the above-described form in which the near-infrared-absorbing particle dispersion body is positioned between transparent substrates, but may have any configuration as long as it includes a laminate structure including the near-infrared-absorbing particle dispersion body and the transparent substrates.

(4-2) Near-infrared-absorbing Transparent Substrate

A near-infrared-absorbing transparent substrate according to the present embodiment includes a transparent substrate and a near-infrared-absorbing layer disposed on at least one surface of the transparent substrate, and the near-infrared-absorbing layer can be the near-infrared-absorbing particle dispersion body described above.

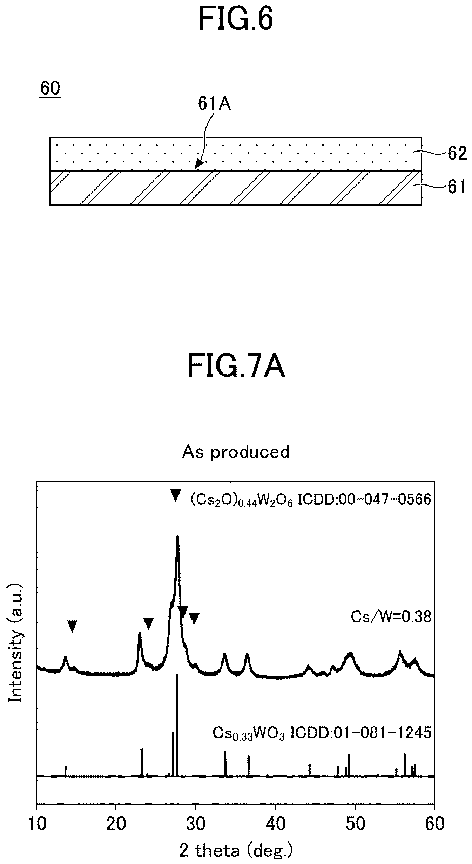

Specifically, as illustrated in FIG. 6, which is an exemplary cross-sectional view of the transparent substrate and the near-infrared-absorbing layer along the laminating direction, the near-infrared-absorbing transparent substrate 60 can include a transparent substrate 61 and a near-infrared-absorbing layer 62. The near-infrared-absorbing layer 62 can be disposed on at least one surface 61A of the transparent substrate 61.

The near-infrared-absorbing transparent substrate of the present embodiment can include a transparent substrate as described above. As the transparent substrate, one or more types selected from, for example, a film substrate (transparent film substrate) and a glass substrate (transparent glass substrate) can be preferably used.

The film substrate is not limited to a film shape, and may be, for example, a board shape or a sheet shape. As the material of the film substrate, one or more types selected from, for example, a polyester resin, an acrylic resin, a urethane resin, a polycarbonate resin, a polyethylene resin, an ethylene-vinyl acetate copolymer, a vinyl chloride resin, a fluororesin, and the like can be preferably used, and ca be used in accordance with various purposes. That said, as the material of the film substrate, a polyester resin is preferable, and, in particular, a polyethylene terephthalate resin (PET resin) is more preferable. That is, the film substrate is preferably a polyester resin film, and more preferably a polyethylene terephthalate resin film.

In a case of using a film substrate as the transparent substrate, it is preferable that the surface of the film substrate is surface-treated in order to realize easy adhesiveness with the near-infrared-absorbing layer.

In order to improve adhesiveness between a glass substrate or a film substrate and the near-infrared-absorbing layer, it is also preferable to form an intermediate layer on the glass substrate or the film substrate and to form a near-infrared-absorbing layer on the intermediate layer. The composition of the intermediate layer is not particularly limited, and can be made of, for example, a polymer film, a metal layer, an inorganic layer (an inorganic oxide layer such as silica, titania, and zirconia), an organic/inorganic complex layer, or the like.

Since the near-infrared-absorbing particle dispersion body has been described above, a description thereof is omitted here. The shape of the near-infrared-absorbing particle dispersion body is not particularly limited, yet preferably has, for example, a sheet shape, a board shape, or a film shape.

A method for producing the near-infrared-absorbing transparent substrate of the present embodiment will be described.

The near-infrared-absorbing transparent substrate of the present embodiment can be produced by forming a near-infrared-absorbing layer, which is a near-infrared-absorbing particle dispersion body in which near-infrared-absorbing particles are dispersed in a solid medium, on a transparent substrate using, for example, the above-described near-infrared-absorbing particle dispersion liquid.

Therefore, the method for producing the near-infrared-absorbing transparent substrate of the present embodiment can include, for example, a coating step and a near-infrared-absorbing layer forming step described below.

In the coating step, a coating liquid containing the above-described near-infrared-absorbing particle dispersion liquid is applied to the surface of the transparent substrate.

In the near-infrared-absorbing layer forming step, the liquid medium in the coating liquid is evaporated, and then the near-infrared-absorbing layer is formed.

The coating liquid used in the coating step can be prepared, for example, by adding and mixing a solid medium or a solid medium precursor such as a resin or a metal alkoxide with the above-described near-infrared-absorbing particle dispersion liquid.

The solid medium precursor means one or more types selected from a monomer and an oligomer of a solid medium, and a solid medium that is liquid when uncured, as described above.

When the near-infrared-absorbing layer, which is a coating film, is formed on the transparent substrate, the near-infrared-absorbing layer becomes a state in which near-infrared-absorbing particles are dispersed in the solid medium. Therefore, the near-infrared-absorbing layer serves as a near-infrared-absorbing particle dispersion body. Thus, a near-infrared-absorbing transparent substrate can be produced by providing a near-infrared-absorbing particle dispersion body on the surface of a transparent substrate.

The solid medium and the solid medium precursor have been described in (1) Characteristics of the solid medium and the near-infrared-absorbing particle dispersion body, and (2) Method for producing near-infrared-absorbing particle dispersion body, so description thereof is omitted here.

The method for applying the coating liquid to the transparent substrate in order to provide the near-infrared-absorbing layer on the transparent substrate may be any method that is capable of uniformly applying the coating liquid to the surface of the transparent substrate, and is not particularly limited. Examples of the method include a bar coating method, a gravure coating method, a spray coating method, a dip coating method, a spin coating method, screen printing, a roll coating method, flow coating, and the like.

Here, a procedure for producing a near-infrared-absorbing layer on the surface of a transparent substrate will be described by taking as an example a case of using an ultraviolet curable resin as a solid medium and applying a coating liquid by a bar coating method to form a near-infrared-absorbing layer.

A coating liquid in which the concentration and additives are suitably adjusted so as to have an appropriate leveling property is applied on the transparent substrate by using wire bars with bar numbers that can satisfy the thickness of the near-infrared-absorbing layer and the content of near-infrared-absorbing particles in accordance with the intended purpose. Then, a solvent such as a liquid medium or the like contained in the coating liquid is removed by drying, and the solid medium is cured by ultraviolet irradiation, whereby a coating layer, which is a near-infrared-absorbing layer, can be formed on the transparent substrate.

The conditions for drying the coating film vary depending on the components, the type of the solvent, and the proportion at which the solvent is used, but usually the drying can be carried out at a temperature of 60°C or higher and 140°C or lower for 20 seconds or more and 10 minutes or less. The ultraviolet irradiation is not particularly limited, and an ultraviolet exposure device such as an ultrahigh-pressure mercury lamp is suitable.

In addition, the tight adhesiveness between the substrate and the near-infrared-absorbing layer, the smoothness of the coating film during coating, the drying property of the organic solvent, and the like can be controlled by steps before and after the formation of the near-infrared-absorbing layer (preceding step and succeeding step). Examples of the preceding and succeeding steps include a substrate surface treatment step, a pre-bake (preheating of the substrate) step, a post-bake (post-heating of the substrate) step, and the like, and the preceding and succeeding steps can be suitably selected. The heating temperature in the pre-bake step and the post-bake step is preferably from 80°C or higher and 200°C or lower, and the heating time is preferably from 30 seconds or more 240 seconds or less.

The method for producing the near-infrared-absorbing transparent substrate of the present embodiment is not limited to the above method. As another example of the configuration of the method for producing the near-infrared-absorbing transparent substrate of the present embodiment, a configuration may include near-infrared-absorbing particle dispersion liquid coating and drying steps, and binder coating and curing steps described below.

In the near-infrared-absorbing particle dispersion liquid coating and drying steps, the above-described near-infrared-absorbing particle dispersion liquid is applied to the surface of a transparent substrate and dried.

In the binder coating and curing steps, a binder that uses a solid medium or a solid medium precursor such as a resin and a metal alkoxide is applied to the surface on which the near-infrared-absorbing particle dispersion liquid is applied and cured.

In this case, a film in which the near-infrared-absorbing particles are dispersed is formed on the surface of the transparent substrate through the near-infrared-absorbing particle dispersion liquid coating and drying steps. The near-infrared-absorbing particle dispersion liquid can be applied by the same method as described above with respect to the coating step of the method for producing the near-infrared-absorbing transparent substrate.

Then, by applying and curing a binder on the film in which the near-infrared-absorbing particles are dispersed, the cured binder is positioned between the near-infrared-absorbing particles, and a near-infrared-absorbing layer can be formed.

The near-infrared-absorbing transparent substrate can further include a coat layer on the surface of the near-infrared-absorbing particle dispersion body. That is, the near-infrared-absorbing transparent substrate may include a multilayer film.

The coat layer can be, for example, a coating film made of an oxide containing one or more selected from Si, Ti, Zr, and Al. In this case, the coat layer can be formed, for example, by applying a coating liquid containing one or more types selected from: an alkoxide containing one or more selected from Si, Ti, Zr, and Al; and a partially hydrolyzed polycondensate of the alkoxide on the near-infrared-absorbing layer, and then heating the coating liquid.

With the coat layer, refraction of visible light is inhibited because the coated component is deposited so as to fill the gaps between the near-infrared-absorbing particles, which are deposited as the first layer. Thus, the haze value of the film can be further decreased and the transmittance of visible light can be improved. In addition, the binding property of the near-infrared-absorbing particles to the substrate can be improved.

Here, as a method of forming a coating film containing an alkoxide containing one or more selected from Si, Ti, Zr, and Al, or a partially hydrolyzed polycondensate thereof, on the near-infrared-absorbing particles alone or on a film containing the near-infrared-absorbing particles, a coating method is preferable from the viewpoint of ease of the film forming operation and cost.

As the coating liquid used in the coating method, it is preferable to use a solvent such as water or an alcohol containing one or more types selected from: an alkoxide containing one or more selected from Si, Ti, Zr, and Al; and a partially hydrolyzed polycondensate of the alkoxide. The content of the alkoxide or the like in the coating liquid is not particularly limited, yet is, for example, preferably 40% by mass or less in terms of an oxide to be contained in a coating to be obtained through heating. It is possible to adjust the pH by adding an acid or an alkali as needed.

By applying the coating liquid as a second layer on a film mainly made of near-infrared-absorbing particles and heating the coating liquid, it is possible to form an oxide film, which is a coat layer containing one or more selected from Si, Ti, Zr, and Al, easily. It is also preferable to use an organosilazane solution as a binder component used in the coating liquid or as a component of the coating liquid.

The substrate heating temperature after application of the near-infrared-absorbing particle dispersion liquid or a coating liquid (coating liquid) containing one or more types selected from: a metal alkoxide containing one or more selected from Si, Ti, Zr, and Al; and a partially hydrolyzed polycondensate thereof is not particularly limited. For example, the substrate heating temperature is preferably 100°C or higher, and more preferably at or above the boiling point of the solvent contained in the coating liquid such as the near-infrared-absorbing particle dispersion liquid.

This is because when the substrate heating temperature is 100°C or higher, the polymerization reaction of the metal alkoxide or the hydrolyzed polymer of the metal alkoxide contained in the coating film can be completed. In addition, when the substrate heating temperature is 100°C or higher, water or an organic solvent serving as a solvent would not substantially remain in the film, so that these solvents would not become a cause of decrease in visible light transmittance in the film after being heated.

The thickness of the near-infrared-absorbing layer on the transparent substrate in the near-infrared-absorbing transparent substrate of the present embodiment is not particularly limited, yet, for practical use, is preferably 10 um or less, and more preferably 6 um or less. This is because, when the thickness of the near-infrared-absorbing layer is 10 um or less, not only the pencil hardness is sufficiently exhibited to have abrasion resistance, but also occurrence of process abnormalities such as occurrence of warpage of the substrate film can be avoided in response to volatilization of the solvent from the near-infrared-absorbing layer and during curing of the binder.

Examples

Specific examples will be described below, but the present invention is not limited to these examples.

(1) Evaluation Method

(1-1) Powder X-ray Diffraction

A powder X-ray diffraction pattern (XRD pattern) complex tungsten oxide particles was measured using a powder X-ray diffractometer (X'Pert PRO MPD (Malvern Panalytical)). The powder X-ray diffraction pattern was measured using CuK$\alpha$ radiation as a radiation source at a tube voltage of 45 kV and a tube current of 40 mA.

(1-2) TEM image and HAADF image observation

The obtained complex tungsten oxide particles were observed using a transmission electron microscope. High-angle angular dark-field (HAADF) images were also observed using STEM (model: JEM-ARM200F) obtained from JEOL Co., Ltd. The particle contrast in the HAADF image is proportional to the number of atoms in the particles and the number of atoms. Because the more layers of heavy atoms are laminated, the brighter contrast is exhibited, it is considered that the brightest contrast and the second brightest contrast are attributable to W, that the third brightest contrast is attributable to Cs, and that O cannot be recognized.

(1-3) Visible light transmittance and solar transmittance

The optical properties of an ink were measured using a spectrophotometer (U-4100 obtained from Hitachi, Ltd.), and the visible light transmittance and the solar transmittance were calculated according to JIS R 3106 (2019).

(1-4) Composition analysis

The proportions of each component contained in the complex tungsten oxide particles were evaluated by the following methods.
The mass proportion of Cs was the average value of three measurements per sample by Polarized Zeeman atomic absorption spectroscopy (AAS, model: ZA3300, obtained from Hitachi High-Tech Corporation).
The mass proportion of W was the average value of three analyses per sample by inductively-coupled plasma optical emission spectroscopy (ICP-OES, model: ICPE-9800, obtained from Shimadzu Corporation).
The mass proportion of O was the average value of three analyses per sample by infrared absorption spectroscopy (IRS) for oxygen detection by an oxygen-nitrogen-hydrogen analyzer (ON-836, LECO Japan Corp.).

(1-5) $\Delta$R and $\Delta$E

When comparing the absorbance and color change of near-infrared-absorbing particle dispersion bodies produced in Example 3 and Comparative Example 2 in response to UV irradiation, $\Delta$R, which is the ratio of the maximum absorbance after irradiation to the maximum absorbance before UV irradiation, and $\Delta$E, which is the amount of change in color, were used in order to eliminate the effect of the concentration in the coating film.
As described above, $\Delta$R is the value obtained by dividing the maximum absorbance after UV irradiation (ABS_after UV) by the maximum absorbance before UV irradiation (ABS_initial). That is, AR=ABS_after UV/ABS _initial.
$\Delta$E can be calculated by the following equation (1), and $\Delta$L\*, $\Delta$a\*, and $\Delta$b\* in the equation are the amounts of change, between before and after UV irradiation, of the color values L\*, a\*, and b\* of the CIE 1976 L\*a\*b\* Color Space, calculated based on the measurement results of a spectrophotometer according to ISO 11664-4:2008.

$$\Delta E = \sqrt{(\Delta L^*)^2 + (\Delta a^*)^2 + (\Delta b^*)^2} \qquad \cdots (1)$$

[Example 1]

Complex tungsten oxide particles were produced using the complex material production apparatus 10 illustrated in FIG. 1 and evaluated. Specific conditions will be described below.
The complex material production apparatus 10 includes a first storage 11 containing a solution containing an element W source and an element M source, which is a raw material solution, a two-fluid nozzle 12 for forming liquid droplets of the raw material and forming a flame at the same time, and a reaction tube 13 connected to a filter 14 for recovering complex tungsten oxide particles formed.

The amount of supply of the raw material solution to the two-fluid nozzle 12 was 3 g/min. The flow rate of oxygen as a carrier gas was controlled by the ejector 15 to be 9 L/min. The flow rate of air in the ejector 15 was controlled to be within a range of from 160 L/min to 180 L/min.

In the formation of the flame by the two-fluid nozzle 12, propane gas and oxygen gas were used, and the flow rate of propane gas was 1.0 L/min and the flow rate of oxygen gas was 5.0 L/min.

As the raw material, a mixed solution of a solution in which $W(CO)_6$, which was an element W source, was dissolved in tetrahydrofuran (THF) (a solution containing an element W source) and a solution in which cesium acetate, which was an element M source, was dissolved in ethanol (a solution containing an element M source) was used, and stored in the first storage 11. The mixed solution, which was the raw material, was prepared such that the Cs/W ratio, which was the ratio between the mole number (Cs) of Cs, which was the element M, and the mole number (W) of the tungsten element, which were contained therein, was 0.38.

The raw material solution and oxygen, which was a carrier gas, were supplied from the first storage 11 to the two-fluid nozzle 12 to form an aerosol (aerosol formation step).

As described above, propane gas and oxygen gas were supplied to the two-fluid nozzle 12 to form a flame reaction field, and the formed aerosol was supplied into the flame and subjected to heat treatment (heat treatment step).

The complex tungsten oxide particles obtained in the heat treatment step were introduced into the reaction tube 13. A cooling water piping 131 was provided around the reaction tube 13, and cooling water was circulated. The complex tungsten oxide particles introduced into the reaction tube 13 were recovered by a filter 14, which was a bag filter.

The complex tungsten oxide particles obtained were evaluated as described above.

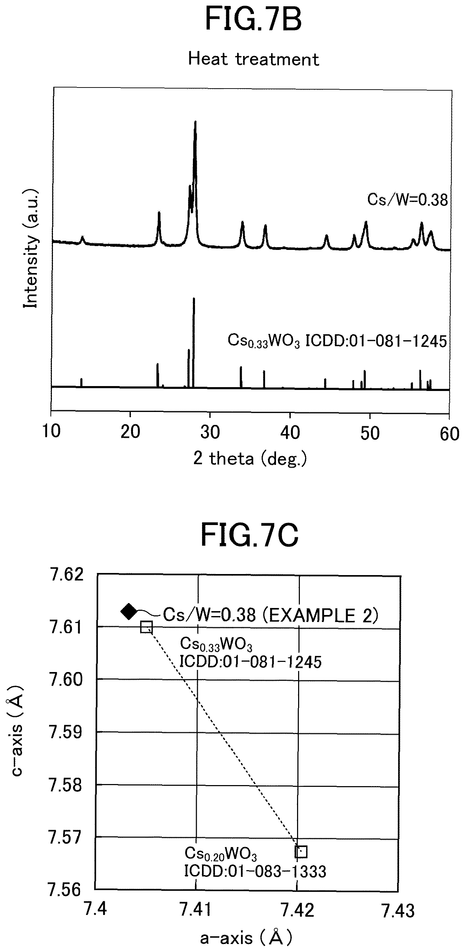

The XRD pattern of the obtained complex tungsten oxide particles is illustrated in FIG. 7A. In the obtained XRD pattern, diffraction peaks of hexagonal $Cs_{0.33}WO_3$ and diffraction peaks of $(Cs_2O)_{0.44}W_2O_6$ ICDD: 00-047-0566 were partially confirmed. Note that in FIGS. 7A and 7B, the positions of the diffraction peaks of $Cs_{0.33}WO_3$ are also indicated in the lower row.

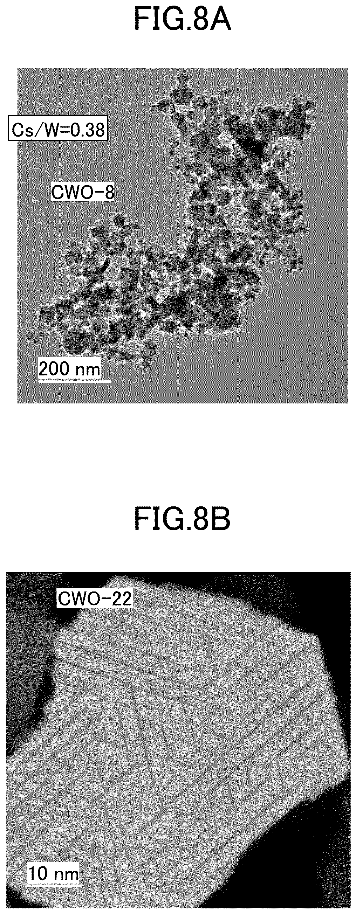

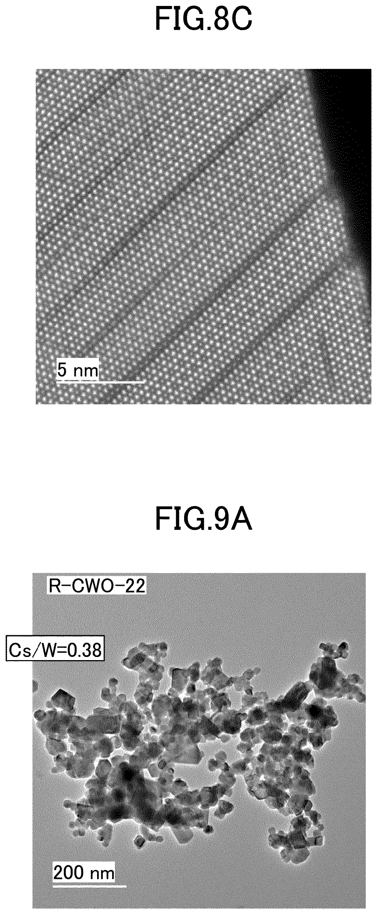

A TEM image and HAADF images of the obtained complex tungsten oxide particles are illustrated in FIGS. 8A to 8C. From the TEM image illustrated in FIG. 8A, the particle diameter was about from 50 nm to 200 nm. That is, the particle diameter was in the range of 10 nm or more and 200 nm or less. In addition, it was confirmed that the particles had facets (flat surfaces). From the HAADF-STEM images illustrated in FIGS. 8B and 8C, the particles were classified as cesium polytungstate, because W-deficient rows generated in W/Cs rows were confirmed in many places.

The Cs/W ratio in the particles was analyzed by ICP or the like, and it was confirmed that the Cs/W ratio decreased to 0.37 from 0.38, which was the composition ratio at the preparation. The O/W ratio was 3.13.

[Example 2]

The complex tungsten oxide particles obtained in Example 1 were subjected to a reducing treatment using the reducing treatment apparatus 20 illustrated in FIG. 2.

As illustrated in FIG. 2, with the heater 22 provided around the reaction tube 21 under an air flow of 3% by volume of $H_2$/97% by volume of Ar, the temperature was raised from room temperature to 500°C, and after the portion at which the container 23 containing the complex tungsten oxide particles 24 was placed reached the reducing treatment temperature and retained in the state for 2 hours, the reducing treatment was carried out by cooling to room temperature (reducing treatment step).

The XRD pattern of the complex tungsten oxide particles obtained is illustrated in FIG. 7B. It was confirmed that the XRD pattern obtained includes only the diffraction peaks of $Cs_{0.33}WO_3$ which was a hexagonal crystal.

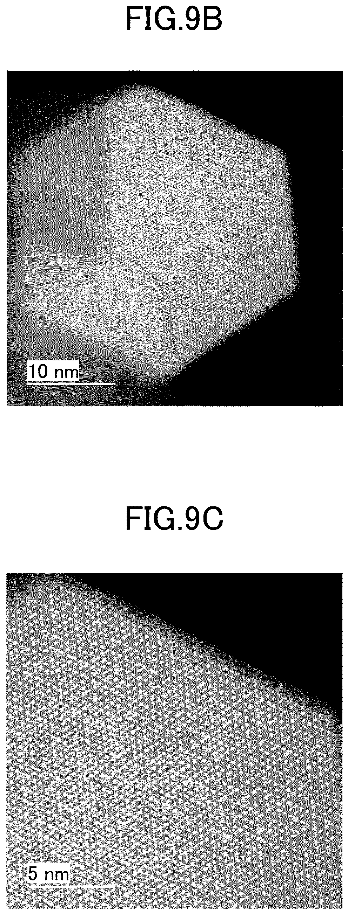

A TEM image and HAADF images of the complex tungsten oxide particles obtained are illustrated in FIGS. 9A to 9C. From the TEM image illustrated in FIG. 9A, it was confirmed that the particle size was about from 50 nm to 200 nm. That is, the particle diameter was in the range of 10 nm or more 200 nm and less. In addition, the particles had facets. From the HAADF-STEM images illustrated in FIGS. 9B and 9C, it was confirmed that the W and Cs deficiency had completely disappeared.

The Cs/W ratio in the particles was analyzed by ICP or the like. As a result, the Cs/W ratio further decreased to 0.34 from 0.37 of Example 1. However, the value of 0.34 was more than the theoretical composition ratio of 0.33 by 0.01, and the particles include a single phase at least in the XRD pattern. Therefore, it is considered that the Cs deficiency almost did not exist. The O/W ratio was 2.83.

Referring to the lattice constants indicated in FIG. 7C, the a-axis length and c-axis length were located more upward and leftward by about 0.003A than $Cs_{0.33}WO_3$. It is considered to have succeeded in synthesizing a complex tungsten oxide that was doped with Cs up to the theoretical ratio of 0.33 in the state of nanoparticles.

The result of semi-quantitation of the obtained complex tungsten oxide particles by XPS measurement are indicated in Table 1. VersaProbe II obtained from Ulvac Phi, Incorporated was used as the XPS. The measurement was performed using monochromatized Al-Ka radiation as the X-ray source, at a beam diameter of 100 $\mu m\phi$, at an X-ray output of 25 W, and at an ultimate vacuum of $5.7\times10^{-7}$ Pa or less.

It is known that tungsten can be doped with an alkali element up to a maximum of 1/3 by molar ratio in a hexagonal crystal structure, but it was confirmed that the ratio in the present example was 0.372, which was greater than 0.33. This suggests the possibility that the alkali element was present in a major amount on the surface of the particles.

Table 1

| | | XPS semi-quantitative analysis result at% | | | | Molar ratio | |
|---|---|---|---|---|---|---|---|
| | | C | Cs | W | O | Cs/W | $W^{6+}$/W |
| Before dispersion | Comp. Ex. 1 | 28.95 | 6.89 | 17.23 | 46.93 | 0.400 | 0.331 |
| | Ex. 2 | 48.89 | 3.79 | 10.20 | 37.12 | 0.372 | 0.309 |
| After dispersion | Comp. Ex. 2 | 61.18 | 1.86 | 6.58 | 27.06 | 0.283 | 0.281 |
| | Ex. 3 | 60.32 | 1.94 | 6.32 | 27.98 | 0.307 | 0.221 |

[Example 3]

An ink, which was a dispersion liquid, was prepared by using 1% by mass of the complex tungsten oxide particles obtained in Example 2, 1% by mass of an amine-based acrylic copolymer polymeric dispersant, and, as the balance, methyl isobutyl ketone (hereinafter also referred to as MIBK) serving as a dispersion medium. The ink was prepared by dispersing and grinding the complex tungsten oxide particles and the dispersion medium using 0.3 mm$\varphi$ ZrO$_2$ beads in a paint shaker.

In Example 3, the optical characteristics of the dispersion liquid were measured, with the dispersion/grinding time changed to 0.5 hours, 1 hour, 2 hours, 4 hours, and 5 hours. That is, it would be possible to know changes of the complex tungsten oxide particles of Example 2 in the process of being dispersed and ground.

The obtained ink, which was a dispersion liquid, was diluted with MIBK so that the concentration of the complex tungsten oxide particles became 0.02% by mass, and the molar absorption coefficient and the transmission profile were measured by a UV-Vis-NIR spectrophotometer (model: U-4100, obtained from Hitachi High-Tech Corporation) using a quartz cell. In the following Examples and Comparative Examples, the spectral characteristics of inks as the dispersion liquids were measured by the same procedure.

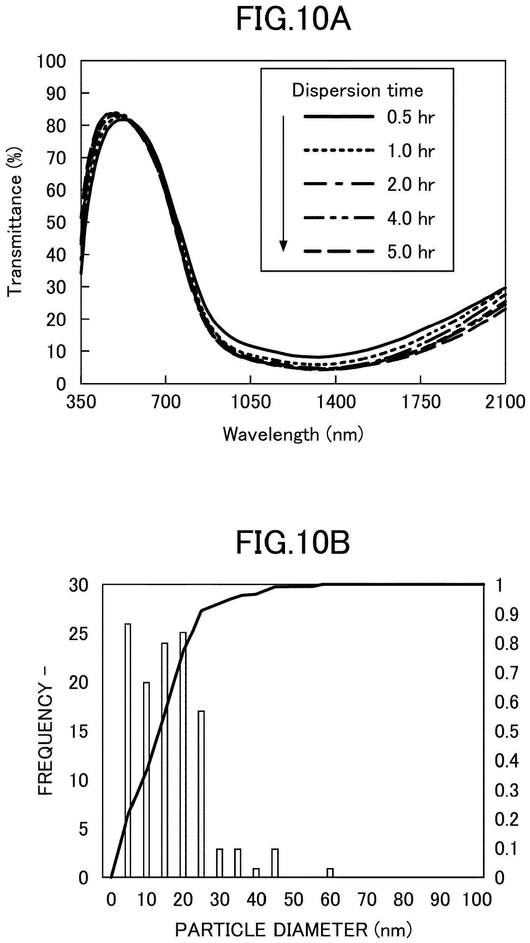

FIG. 10A illustrates the changes in the measured transmission profiles of the ink prepared by changing the grinding time of the complex tungsten oxide particles. It was confirmed that the absorption characteristics in the infrared range did not change when the grinding times were about 2 hours, and that the light scattering in the visible light range decreased when the grinding time was 2 hours or more.

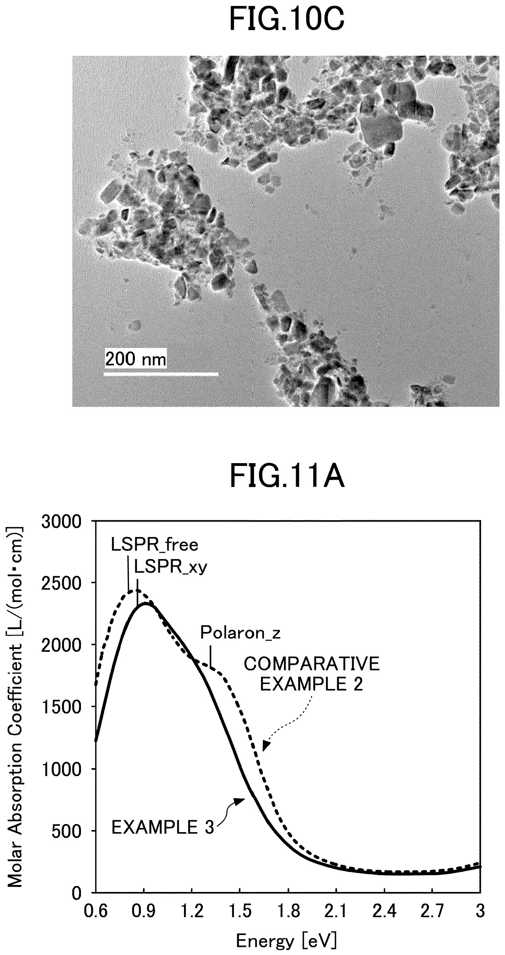

FIG. 10B and FIG. 10C illustrate the measurement result of the particle diameter distribution measured from a TEM image of the complex tungsten oxide powder in the ink obtained through 5 hours of dispersion/grinding treatment, and the TEM image, respectively. The average particle size was 14.3 nm, and the standard deviation was 2.7 nm. Coarse particles larger than 70 nm were not confirmed. The average particle size and standard deviation were the average and standard deviation of the particle diameter obtained by measuring the length from the TEM image.

The result of XPS semi-quantitation of the complex tungsten oxide powder in the ink obtained through 5 hours of dispersion/grinding treatment is indicated in Table 1. By grinding, Cs/W decreased to 0.307 as compared with Example 2, but it was confirmed that the Cs/W ratio was larger than that exhibited in Comparative Example 2.

The molar absorption coefficients of the complex tungsten oxide particles subjected to 5 hours of dispersion/-grinding treatment in Example 3 and complex tungsten oxide particles subjected to 7 hours of dispersion/grinding treatment in Comparative Example 2 are compared in FIG. 11A.

In Comparative Example 2, there were absorption peaks at 0.8 and 1.4 eV, whereas in Example 3, an absorption peak appeared at 0.95 eV.

According to the Drude-Lorentz analysis by Machida et al. in NPL 9, in the Cs$_{0.32}$WO$_{3-y}$ powder prepared by the solid phase method, Cs free electrons contribute to the LSPR// at 1.0 eV, whereas $V_O$ electrons contribute to the LSPR$\perp$ (0.8 eV) in the xy direction and the polaron around 1.4 eV. It seemed that the three absorptions mentioned above overlapped and appeared like a 0.8 eV peak with a shoulder at 1.4 eV. Based on the above finding and the result illustrated in FIG. 11A, it is considered that the complex tungsten oxide particles of the present Example prepared by the flame spray method had less absorption peak attributable to $V_O$ compared with the absorption peak of the complex tungsten oxide particles of the below-described Comparative Example 2 prepared by the solid phase method.

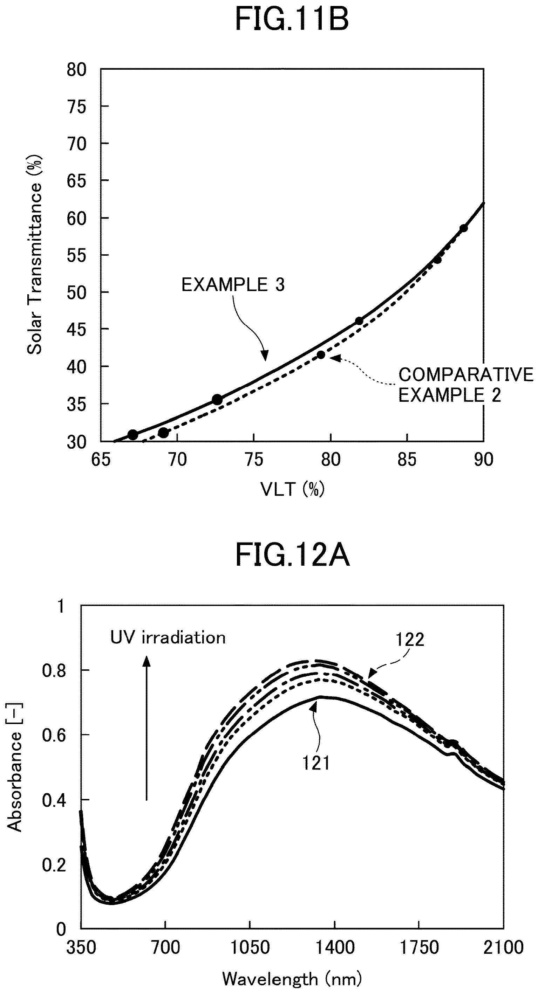

For reference, FIG. 11B illustrates the relationship between Visible Light Transmittance (VLT) and Solar Transmittance in order to show the appropriateness of comparing the complex tungsten oxide particles of Example 3 dispersed and ground for 5 hours with the complex tungsten oxide particles of Comparative Example 2 dispersed and ground for 7 hours. As illustrated in FIG. 11B, both have almost the same visible light transmittance and solar transmittance.

That is, it was confirmed that the complex tungsten oxide particles obtained in the present Example are almost asymptotic to the powder synthesized by the solid phase method of Comparative Example 2, whereas the characteristics of existing powders synthesized by the gas phase method are approximately the same as those of the powders of the Liquid fed spray pyrolysis (LFSP) and the Solid fed spray pyrolysis (SFSP).

FIG. 12A illustrates the result of evaluation of the light-resistant coloring property of the complex tungsten oxide particles synthesized in the present Example. A dispersion liquid of the complex tungsten oxide particles synthesized in the present Example and a UV curable resin UV-3701 (Toa Gosei Co., Ltd.) were mixed at a mass ratio of 1:1 to prepare a coating liquid. Next, the coating liquid was applied on a soda glass substrate (3 mm in thickness × 10 mm × 10 mm) using a wire bar (#6) and heated at 100°C for 1 minute to dry and remove the organic solvent contained in the coating liquid. Further, by polymerizing and curing the UV curable resin in the coating liquid using a UV conveyor apparatus (model: ECS-401GX, obtained from Eye Graphics Company), a cured film as a near-infrared-absorbing particle dispersion body was produced on the glass substrate, which was a transparent substrate.

A mercury lamp (model: H04-L41, obtained from Eye Graphics Company) having a main wavelength at 365 nm was used as the UV source in the UV conveyor apparatus, and the lamp power of the UV conveyor was set to 2.0 kW. With this apparatus, UV irradiation at an intensity of 134.8 mW/cm$^2$ was performed, and the transmission profiles of the near-infrared-absorbing particle dispersion body at integrated intensities of 815.9 mJ/cm$^2$, 1,631.8 mJ/cm$^2$, 3,263.6 mJ/cm$^2$, and 4,895.4 mJ/cm$^2$ were measured, respectively. The measurement was performed 3 times for each integrated intensity sample, and the average value was used.

Changes in the absorbance between before and after UV irradiation in the case of performing UV irradiation of the near-infrared-absorbing particle dispersion body of the present Example are illustrated in FIG. 12A. In FIG. 12A, an absorbance curve 121 is the result before UV irradiation, and absorbance curves are indicated in the ascending order of the UV irradiation integrated intensity along a direction indicated by an arrow denoted in the graph as UV irradiation. Therefore, the absorbance curve 122 is the evaluation result of the sample subjected to the highest UV irradiation integrated intensity.

According to the results illustrated in FIG. 12A, it was confirmed from the absorbance curve 121 of the near-infrared-absorbing particle dispersion body before UV irradiation that the absorbance at a wavelength of 1,350 nm was the maximum value of 0.71356. In the absorbance curve 122 of the near-infrared-absorbing particle dispersion subjected to UV irradiation at the integrated intensity of 4,895.4 mJ/cm$^2$, the peak position changed to a wavelength of 1,325 nm and the maximum absorbance value changed to 0.826.

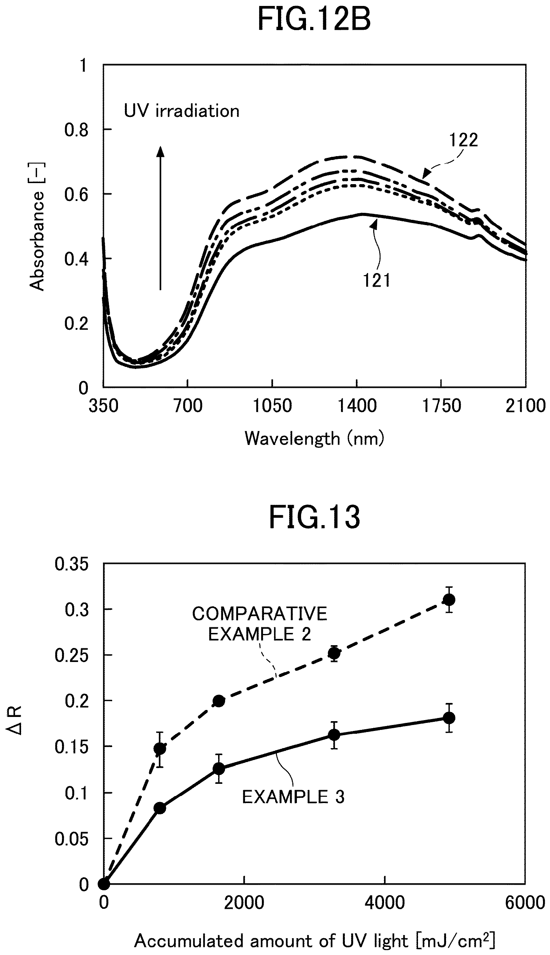

FIG. 12B illustrates absorbance changes between before and after UV irradiation in the case of performing UV irradiation of the near-infrared-absorbing particle dispersion body of Comparative Example 2 described below. Also, in FIG. 12B, an absorbance curve 121 is the result before UV irradiation, and absorbance curves are indicated in the ascending order of the UV irradiation integrated intensity along a direction indicated by an arrow denoted in the graph as UV irradiation. Therefore, the absorbance curve 122 is the evaluation result of the sample subjected to the highest UV irradiation integrated intensity.

According to the results illustrated in FIG. 12B, it was confirmed from the absorbance curve 121 of the near-infrared-absorbing particle dispersion body before UV irradiation that the absorbance at a wavelength of 1,420 nm was the maximum value of 0.537. In the absorbance curve 122 of the near-infrared-absorbing particle dispersion body subjected to UV irradiation at the integrated intensity of 4,895.4 mJ/cm$^2$, the peak position changed to a wavelength of 1,400 nm and the maximum absorbance value changed to 0.714.

FIG. 13 illustrates the result of evaluating the amount of absorbance change due to UV irradiation as ΔR by removing the difference in the initial absorbance. It was confirmed that the change ΔR of the sample synthesized in the present Example was 0.179 even in the case where the amount of UV irradiation was the maximum, meaning that absorbance change was almost suppressed. On the other hand, the change of the sample denoted as Comparative Example 2 continued even after the sample was irradiated until the integrated intensity of UV irradiation became 4,895.4 mJ/cm$^2$.

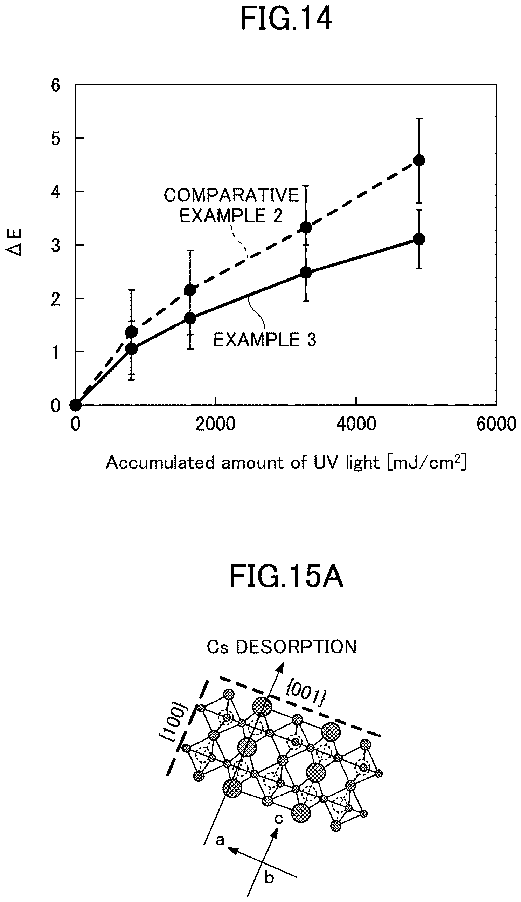

FIG. 14 illustrates the result of evaluating the amount of color change due to UV irradiation as ΔE. It can be seen that the amount of color change between before and after UV irradiation was also suppressed in the near-infrared-absorbing particle dispersion body of the present Example, compared with the near-infrared-absorbing particle dispersion body of Comparative Example 2.

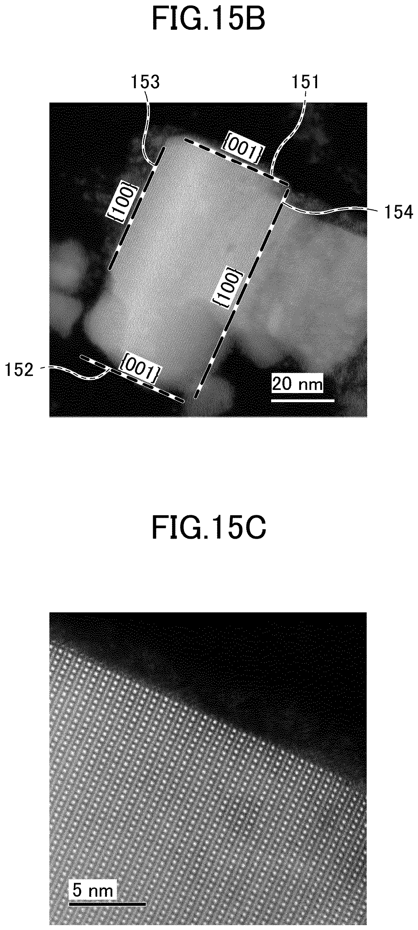

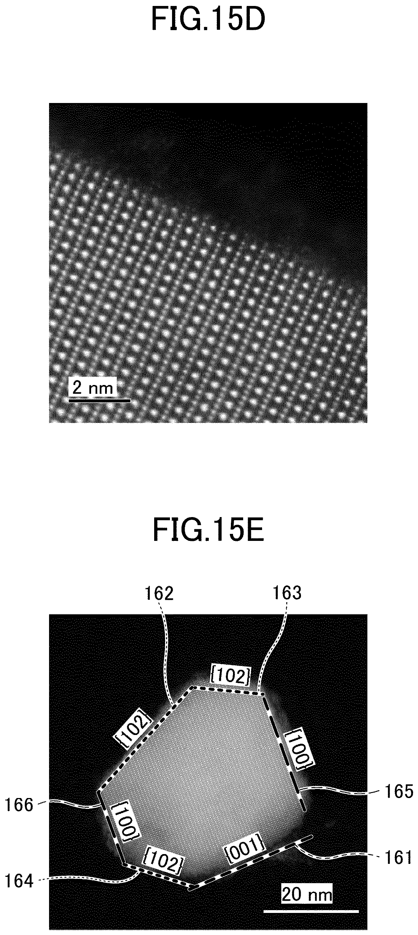

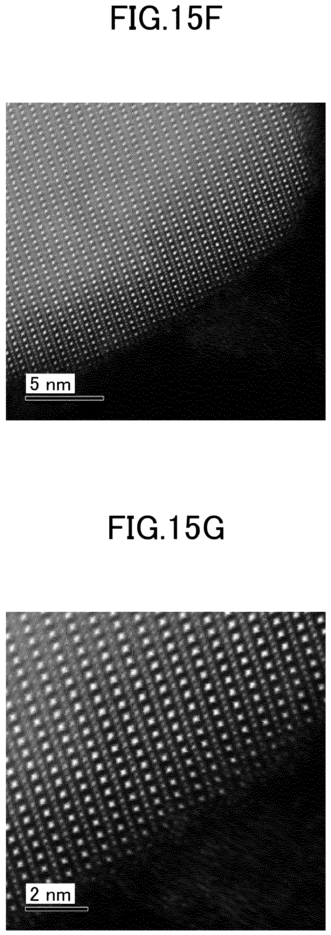

FIGS. 15A to 15D illustrate HAADF-STEM images of the near-infrared-absorbing particles and the exemplary diagrams of the crystal structure in order to investigate the factor by which the amount of absorbance change and the amount of color change in response to UV irradiation were lower than Comparative Example 2. FIG. 15A illustrates the crystal structure of the complex tungsten oxide particles as viewed from the complex tungsten oxide particle observation direction illustrated in FIGS. 15B to 15D.

Since Cs atoms of a hexagonal crystal structure exist in a one-dimensional channel referred to as a hexagonal tunnel and are surrounded by $WO_6$ octahedrons, the Cs desorption direction is estimated to be the direction parallel with the c-axis, that is, the direction [001] as expressed by direction index. FIGS. 15B to 15D illustrate the HAADF-STEM images of the powder observed at {010} incidence. As illustrated in FIG. 15B, when a complex tungsten oxide particle of the present embodiment is observed via the (010) plane, the sides formed by a plane not parallel with the c-axis, that is, the sides formed by the (001) plane in the case of FIG. 15B, are only the sides 151 and 152.

The sides formed by any other exposed plane, that is, the sides formed by a plane parallel with the c-axis, are the sides formed by the (100) plane in the case of FIG. 15B, and are the sides 153 and 154.

The total length of the sides 151 and 152 is 34.7 nm. On the other hand, the total length of the sides 153 and 154, which are the sides formed by the plane parallel with the c-axis, is 71.9 nm. Therefore, it was successfully confirmed that the occupation ratio of the length of the sides formed by the plane parallel with the c-axis among the sides surrounding the (010) plane in the observation of the complex tungsten oxide particles via the (010) plane was $71.9 \div (34.7+71.9) \times 100 = 67.4\%$.

Although the evaluation result of one particle was presented here, when other similar complex tungsten oxide particles were evaluated, the occupation ratio turned out to be 60% or more.

When the complex tungsten oxide particles produced in Examples 1 and 2 were evaluated in the same manner, the occupation ratio was 60% or more.

[Comparative Example 1]

As Comparative Example 1, a $Cs_{0.33}WO_3$ powder was synthesized by a solid phase method.

Tungstic acid was added to a cesium carbonate aqueous solution and stirred, and then the resulting product was retained at 100°C for 12 hours to dry and remove water to prepare a precursor.

The precursor had a molar ratio Cs/W of cesium atom (Cs) to tungsten atom (W) of 0.33.

The obtained precursor was packed in a baking container and baked at 800°C for 1 hour in a reducing atmosphere in which a volume ratio $H_2/N_2$ was 3/97. The obtained $Cs_{0.32}WO_3$ was coarse particles in which even finer particles was 100 um or more. The XRD result of the obtained coarse $Cs_{0.33}WO_3$ powder showed that there was only the diffraction peak of $Cs_{0.33}WO_3$. The Cs/W ratio by an ICP analysis was 0.33.

The results of semi-quantitation of the obtained complex tungsten oxide powder by XPS measurement are indicated in Table 1. Cs/W was 0.400.

[Comparative Example 2]

An ink, which was a dispersion liquid, was prepared by using 1% by mass of the complex tungsten oxide particles obtained in Comparative Example 1, 1% by mass of an amine-based acrylic copolymer polymeric dispersant, and, as the balance, methyl isobutyl ketone serving as a dispersion medium. The ink was prepared by dispersing and grinding the complex tungsten oxide particles, the dispersant, and the dispersion medium using 0.3 mmφ $ZrO_2$ beads in a paint shaker.

In Comparative Example 2, the optical characteristics of the dispersion liquid were measured, with the dispersion/grinding times changed to 0.5 hours, 1 hour, 2 hours, 4 hours, 5 hours, and 7 hours. That is, it would be possible to know changes of the complex tungsten oxide particles of Comparative Example 1 in the process of being dispersed and ground.

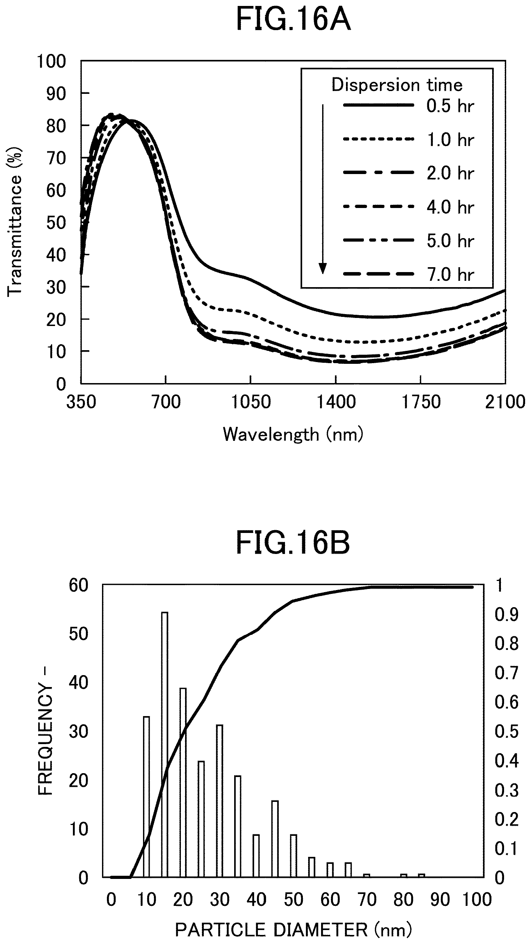

The changes in the measured transmission profiles of the ink prepared by changing the grinding time of the complex tungsten oxide particles are illustrated in Fig. 16A. When the grinding time was 0.5 hours, the transmittance in the infrared range was low at approximately 20%. When the grinding time was 2 hours or more, the transmittance in the infrared range decreased to approximately 5%. When the grinding time was further increased, the effect of Rayleigh scattering decreased and the visible transparency was improved. A practically usable dispersion liquid was obtained by 7 hours of grinding.

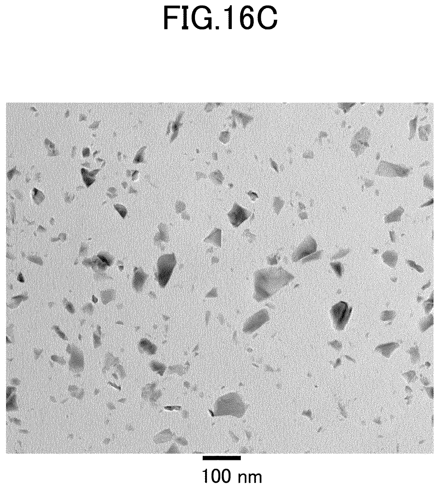

FIGS. 16B and 16C illustrate the measurement results of the particle diameter distribution measured from a TEM image of the complex tungsten oxide powder in the ink obtained through 7 hours of dispersion/grinding treatment, and the TEM image. The average particle size (average particle diameter) was 24.6 nm, and the standard deviation was 30 nm.

Table 1 indicates the results of XPS semi-quantitation of the complex tungsten oxide powder in the ink obtained through 7 hours of dispersion/grinding. Cs/W was 0.283, which was smaller than that in Example 3, and it is inferred that Cs on the surface desorbed through grinding for a long time.

As described in the description of Example 3 with reference to FIGS. 12A, 12B, 13, and 14, the near-infrared-absorbing particle dispersion body of Comparative Example 2 exhibited a greater amount of color change between before and after UV irradiation than the near-infrared-absorbing particle dispersion body of Example 3.

Here, as in the case of Example 3, FIGS. 15E to 15G illustrate HAADF-STEM images of the powder observed at {010} incidence. As illustrated in FIG. 15E, when a complex tungsten oxide particle of the present Comparative Example was observed via the (010) plane, the sides formed by planes not parallel with the c-axis among the sides surrounding the (010) plane, that is, the sides formed by the (001) plane and the (102) plane in the case of FIG. 15E, were the side 161 to the side 164.

The sides formed by any other exposed plane, that is, the sides formed by a plane parallel with the c-axis, are the sides formed by the (100) plane in the case of FIG. 15E, and were the side 165 and the side 166.

Therefore, it was confirmed that the occupation ratio of the length of the sides formed by the plane parallel with the c-axis among the sides surrounding the (010) plane in the observation of the complex tungsten oxide particle via the (010) plane was 31.7%.

From the above results, it is inferred that the ratio of the length of the sides formed by the plane parallel with the c-axis among the sides surrounding the (010) plane in an observation of complex tungsten oxide particles via the (010) plane contributed to the difference in the property of exhibiting coloring in response to ultraviolet irradiation, that is, the photo-coloration property.

This application claims priority to Japanese Patent Application No. 2022-061250 filed with the Japan Patent Office on March 31, 2022, and the entire contents of Japanese Patent Application No. 2022-061250 are incorporated in this international application by reference.

REFERENCE SIGNS LIST

10 complex material production apparatus
11 first storage
12 two-fluid nozzle
13 reaction tube
131 piping
14 filter
15 ejector
20 reducing treatment apparatus
21 reaction tube
21A one port
21B other port
22 heater
23 container
24 complex tungsten oxide particles
30 near-infrared-absorbing particle dispersion liquid
31 near-infrared-absorbing particles
32 liquid medium
40 near-infrared-absorbing particle dispersion body
41 near-infrared-absorbing particles
42 solid medium
50 near-infrared-absorbing laminate
51 near-infrared-absorbing particle dispersion body
521, 522 transparent substrate
60 near-infrared-absorbing transparent substrate
61 transparent substrate
61A one surface
62 near-infrared-absorbing layer
151 to 154 side
161 to 166 side

Claims

1. Complex tungsten oxide particles comprising a complex tungsten oxide,

   wherein the complex tungsten oxide is represented by a general formula: $M_xW_yO_z$ (where an element M is one or more elements selected from alkali metals, alkaline earth metals, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I, W is tungsten, O is oxygen, $0.20 \leq x/y \leq 0.37$, and $2.2 \leq z/y \leq 3.3$),

a crystal system is hexagonal, and

when the complex tungsten oxide particles are observed via a (010) plane, an occupation ratio of a length of a side formed by a plane parallel with a c-axis among sides surrounding the (010) plane is 60% or more.

2. The complex tungsten oxide particles according to claim 1,
   wherein the element M contains one or more elements selected from Rb and Cs.

3. The complex tungsten oxide particles according to claim 1 or 2,
   wherein a particle diameter is 10 nm or more and 200 nm or less.

4. The complex tungsten oxide particles according to any one of claims 1 to 3,
   wherein in a case where the complex tungsten oxide particles are subjected to a dispersion treatment for being dispersed in a dispersion medium,
   an amount of decrease of M/W, which is a molar ratio of the element M (M) to the tungsten (W), through the dispersion treatment as compared with before the dispersion treatment is 0.1 or less.

5. A near-infrared-absorbing particle dispersion liquid, comprising:

   near-infrared-absorbing particles; and
   a liquid medium,
   wherein the near-infrared-absorbing particles are the complex tungsten oxide particles of any one of claims 1 to 4.

6. A near-infrared-absorbing particle dispersion body, comprising:

   near-infrared-absorbing particles; and
   a solid medium,
   wherein the near-infrared-absorbing particles are the complex tungsten oxide particles of any one of claims 1 to 4.

# FIG.1

<u>10</u>

# FIG.2

<u>20</u>

# FIG.3

30

— 31
— 32

# FIG.4

40

— 41
— 42

# FIG.5

50

— 522
— 51
— 521

# FIG.6

# FIG.7A

As produced

# FIG.7B

Heat treatment

# FIG.7C

# FIG.8A

# FIG.8B

# FIG.8C

5 nm

# FIG.9A

R-CWO-22

Cs/W=0.38

200 nm

# FIG.9B

10 nm

# FIG.9C

5 nm

# FIG.10A

# FIG.10B

# FIG.10C

# FIG.11A

# FIG.11B

# FIG.12A

## FIG.12B

## FIG.13

# FIG.14

# FIG.15A

# FIG.15B

# FIG.15C

# FIG.15D

2 nm

# FIG.15E

# FIG.15F

5 nm

# FIG.15G

2 nm

# FIG.16A

# FIG.16B

# FIG.16C

100 nm

| INTERNATIONAL SEARCH REPORT | International application No. |
|---|---|
| | **PCT/JP2023/012980** |

**A.    CLASSIFICATION OF SUBJECT MATTER**

***C01G 41/00***(2006.01)i; ***C09K 3/00***(2006.01)i
FI:    C01G41/00 A; C09K3/00 105

According to International Patent Classification (IPC) or to both national classification and IPC

**B.    FIELDS SEARCHED**

Minimum documentation searched (classification system followed by classification symbols)

C01G41/00; C09K3/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

**C.    DOCUMENTS CONSIDERED TO BE RELEVANT**

| Category* | Citation of document, with indication, where appropriate, of the relevant passages | Relevant to claim No. |
|---|---|---|
| X | JP 2021-028279 A (SUMITOMO METAL MINING CO., LTD.) 25 February 2021 (2021-02-25)<br>   paragraphs [0139]-[0190], fig. 4-11 | 1-6 |
| A | JP 2015-199668 A (SUMITOMO METAL MINING CO., LTD.) 12 November 2015 (2015-11-12)<br>   entire text | 1-6 |
| A | JP 2019-044019 A (SUMITOMO METAL MINING CO., LTD.) 22 March 2019 (2019-03-22)<br>   entire text | 1-6 |
| A | WO 2019/058737 A1 (SUMITOMO METAL MINING CO., LTD.) 28 March 2019 (2019-03-28)<br>   entire text | 1-6 |
| A | CN 109761282 A (BEIHANG UNIVERSITY) 17 May 2019 (2019-05-17)<br>   entire text | 1-6 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 June 2023** | **20 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/012980**

C.    DOCUMENTS CONSIDERED TO BE RELEVANT

| Category* | Citation of document, with indication, where appropriate, of the relevant passages | Relevant to claim No. |
|---|---|---|
| A | CN 105016392 A (YANTAI JIALONG NANO INDUSTRY CO., LTD.) 04 November 2015 (2015-11-04)<br>    entire text | 1-6 |

Form PCT/ISA/210 (second sheet) (January 2015)

INTERNATIONAL SEARCH REPORT
Information on patent family members

International application No.

**PCT/JP2023/012980**

| Patent document cited in search report | | | Publication date (day/month/year) | Patent family member(s) | | | Publication date (day/month/year) |
|---|---|---|---|---|---|---|---|
| JP | 2021-028279 | A | 25 February 2021 | (Family: none) | | | |
| JP | 2015-199668 | A | 12 November 2015 | (Family: none) | | | |
| JP | 2019-044019 | A | 22 March 2019 | (Family: none) | | | |
| WO | 2019/058737 | A1 | 28 March 2019 | US | 2020/0299825 | A1 | |
| | | | | entire text | | | |
| | | | | EP | 3686312 | A1 | |
| | | | | JP | 2019-60012 | A | |
| CN | 109761282 | A | 17 May 2019 | (Family: none) | | | |
| CN | 105016392 | A | 04 November 2015 | (Family: none) | | | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4096205 B
- JP 2012532822 A
- WO 2017129516 A
- US 20100102700
- JP 2022061250 A

**Non-patent literature cited in the description**

- **TAKEDA HIROMITSU** ; **KENJI ADACHI**. Near infrared absorption of tungsten oxide nanoparticle dispersions. *Journal of the American Ceramic Society*, 2007, vol. 90 (12), 4059-4061
- **ADACHI K.** ; **OTA Y.** ; **TANAKA H.** ; **OKADA M.** ; **OSHIMURA N** ; **TOFUKU A**. Chromatic instabilities in cesium-doped tungsten bronze nanoparticles. *Journal of Applied Physics*, 2013, vol. 114 (19), 194304
- **ZENG XIANZHE et al.** The preparation of a high performance near infrared shielding CsxWO3/SiO2 composite resin coating and research on its optical stability under ultraviolet illumination.. *Journal of Materials Chemistry C*, 2015, vol. 3.31, 8050-8060
- **ZHOU YIJIE et al.** CsxWO3 nanoparticle-based organic polymer transparent foils: low haze, high near infrared-shielding ability and excellent photochromic stability. *Journal of Materials Chemistry C*, 2017, vol. 5.25, 6251-6258
- **GUO CHONGSHEN et al.** Novel synthesis of homogeneous CsxWO3 nanorods with excellent NIR shielding properties by a water controlled-release solvothermal process.. *Journal of Materials Chemistry*, 2010, vol. 20 (38), 8227-8229
- **MAMAK MARC et al.** Thermal plasma synthesis of tungsten bronze nanoparticles for near infra-red absorption applications.. *Journal of Materials Chemistry*, 2010, vol. 20 (44), 9855-9857
- **HIRANO TOMOYUKI et al.** Synthesis of highly crystalline hexagonal cesium tungsten bronze nanoparticles by flame-assisted spray pyrolysis.. *Advanced Powder Technology*, 2018, vol. 29 (10), 2512-2520
- **NAKAKURA SHUHEI et al.** Improved photochromic stability in less deficient cesium tungsten bronze nanoparticles.. *Advanced Powder Technology*, 2020, vol. 31 (2), 702-707
- **MACHIDA K.** ; **OKADA M.** ; **ADACHI K.** Excitations of free and localized electrons at nearby energies in reduced cesium tungsten bronze nanocrystals. *J. Appl. Phys*, 2019, vol. 125 (10), 103103